(19) Europäisches Patentamt
European Patent Office
Office européen des brevets

(11) EP 2 542 869 B1

(12) EUROPEAN PATENT SPECIFICATION

(45) Date of publication and mention
of the grant of the patent:
**12.01.2022 Bulletin 2022/02**

(51) Int Cl.:
***G01J 3/28*** (2006.01)

(21) Application number: **11709245.2**

(22) Date of filing: **03.03.2011**

(86) International application number:
**PCT/US2011/027048**

(87) International publication number:
**WO 2011/109632 (09.09.2011 Gazette 2011/36)**

(54) **METHOD OF LOCATING AND REMOVING SPIKE NOISE FROM SPECTRAL DATA**

VERFAHREN ZUR AUFFINDUNG UND ENTFERNUNG VON RAUSCHSPITZEN AUS SPEKTRALDATEN

MÉTHODE DE LOCALISATION ET DE SUPPRESSION DU BRUIT DE POINTE DANS DES DONNÉES SPECTRALES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.03.2010 US 309962 P**

(43) Date of publication of application:
**09.01.2013 Bulletin 2013/02**

(73) Proprietor: **Battelle Memorial Institute Columbus, OH 43201 (US)**

(72) Inventors:
 • **AUME, Laura, L.**
  **Circleville, OH 43113 (US)**
 • **RONNINGEN, Theodore, J.**
  **Lewis Center, OH 43035 (US)**
 • **RUST, Steve**
  **Worthington, OH 43085 (US)**
 • **WIGHTMAN, Jennifer, L.**
  **Worthington, OH 43085 (US)**

(74) Representative: **Kehoe, Laura Ellen et al Keltie LLP No.1 London Bridge London SE1 9BA (GB)**

(56) References cited:
 • **HIDEO TAKEUCHI ET AL: "SIMPLE AND EFFICIENT METHOD TO ELIMINATE SPIKE NOISE FROM SPECTRA RECORDED ON CHARGE-COUPLED DEVICE DETECTORS", APPLIED SPECTROSCOPY, THE SOCIETY FOR APPLIED SPECTROSCOPY. BALTIMORE, US, vol. 47, no. 1, 1 January 1993 (1993-01-01), pages 129-131, XP000331361, ISSN: 0003-7028, DOI: DOI:10.1366/0003702934048578**
 • **ZHANG, HENSON: "A practical algorithm to remove cosmic spikes in Raman imaging data for pharmaceutical applications", APPLIED SPECTROSCOPY, vol. 61, no. 9, 31 December 2007 (2007-12-31), pages 1015-1020, XP002638566,**
 • **Wieland. Hill ET AL: "Spike-correction of weak signals from charge-coupled devices and its application to Raman spectroscopy", Analytical Chemistry, vol. 64, no. 21, 1 November 1992 (1992-11-01), pages 2575-2579, XP055652907, US ISSN: 0003-2700, DOI: 10.1021/ac00045a019**

EP 2 542 869 B1

## Description

TECHNICAL FIELD

The present invention relates to the processing of spectral analysis data, and more particularly, to filtering spectral analysis data to remove random noise and other disturbances and/or to compensate for deficiencies in the data collection process utilized to capture the spectral data.

BACKGROUND ART

An assortment of analytical identification methods exist for the non-destructive testing of materials. Particularly, various spectroscopic methods, including Raman spectroscopy, can be advantageously employed in the practical identification of particulates. By way of illustration, in dispersive Raman spectroscopy, a laser is used as an excitation source to focus light onto a particle. The laser light from the excitation source interacts with the Raman active chemical bonds of the particle impinged upon by the laser light to produce Raman lines that are shifted from the wavelength of the excitation laser by corresponding vibration frequencies. Light from the sample area of the particle is filtered using a filter that blocks the excitation wavelength while passing the Raman-shifted wavelengths to a spectrometer.

The spectrometer may utilize a grating that disperses light causing different wavelengths to leave the grating at different angles. Under this arrangement, the light from the grating travels to an optical detector, such as a charge coupled device (CCD) camera to capture spectral data representative of the Raman spectrum of the particle under interrogation. The data captured by the CCD can be utilized as a signature, which is typically compared to a library of previously determined signatures to identify the material excited by the laser.

An article by Takeuchi et al. in Applied Spectroscopy entitled "Simple and efficient method to eliminate spike noise from spectra recorded on charge-coupled device detectors" (1993) describes that charge-coupled device (CCD) detectors have several characteristics which are suitable for spectroscopic measurements at very low light levels. The quantum efficiency of a CCD is high over wide wavelength range, and the dark count rate is greatly reduced by cooling the detector. Further reduction of the dark count can be made by setting the pixel binning frame to the detector area that is actually illuminated.

An article by Wieland Hill et al. in Analytical Chemistry entitled "Spike-correction of weak signals from charge-coupled devices and its application in Raman spectroscopy" (Vol. 64, No. 21, 1 November 1992, Pages 2575-2579) describes how the detection of weak signals by a charge-coupled device (CCD) can be restricted by charge spikes due to cosmic rays rather than by thermal background noise. Such spikes can be removed using missing point estimates calculated from neighboring data points. In this work, a multiple missing point fitting method is developed for the correction of heavily contaminated data as obtained after long-time integration of weak signals. Spikes or other outliers can be recursively identified on the basis of a comparison of the differences of measured and estimated values with their standard deviations. The standard deviations are calculated considering shot and read noise of the measurement as well as the variance of the estimates. This allows a reliable spike correction of up to four spikes within a nine-point Interval. The performance of the spike correction Is demonstrated for the determination of the thermal background signal of a nitrogen-cooled CCD and for low-signal-level Raman scattering of pyridine adsorbed at a "smooth" silver film.

DISCLOSURE OF INVENTION

According to the present invention, there is provided a method of locating and removing spike noise from spectral data according to Claim 1. Further advantageous aspects are provided in dependent Claims 2 to 12. The method comprises collecting a plurality of replicates of spectral data, where each collected replicate comprises a plurality of pixels, which have an associated intensity value. The plurality of replicates represents discrete instances of spectral data obtained sequentially from a sample under interrogation. The method further comprises performing replicate processing to condition the intensity values of the collected replicates for subsequent pixel processing and spike noise filtering. Then the method performs pixel processing to identify outliers corresponding to noise spikes within the plurality of replicates by collectively evaluating the conditioned intensity values of the plurality of replicates as a function of pixel position. After pixel processing, the method performs spike noise filtering by removing each identified outlier from its replicate and by replacing the removed outlier value with a computed approximation of an intensity value of a noise-free signal at that removed outlier pixel position.

According to an example useful for understanding the present invention, the following method of locating and removing noise spikes from spectral data is presented. The method comprises obtaining a first raw replicate of spectral data, wherein the first raw replicate represents a first instance of spectral data obtained from a sample under investigation; and obtaining a second raw replicate of spectral data, wherein the second raw replicate represents a second instance of spectral data obtained from the same sample under investigation. The method then computes a first smoothed replicate from the first raw replicate and a second smoothed replicate from the second raw replicate. The method compares the first raw replicate, the first smoothed replicate, the second raw replicate, the second smoothed replicate, or any combination thereof to determine whether at least one noise spike is present in one of the raw replicates. If the method locates a spike, then the method eliminates the effect of each located noise spike in the first raw replicate and the second raw replicate by locally re-smoothing the corresponding replicate around each located spike. After the effects of the noise spikes are removed, the method consolidates the first raw replicate and the second raw replicate into a single spectrum that is free of cosmic spikes.

According to a further example useful for understanding the present invention, a method of detecting bad pixel elements in a charge coupled device is presented. The method comprises collecting a plurality of replicates of spectral data, wherein each collected replicate comprises a plurality of pixels, each pixel having an associated intensity value. The method then calculates a rolling median for each pixel of each collected replicate and estimates a noise level of the corresponding spectrum. The method also identifies pixels of interest, local minima, and the height of a negative peak of select pixels. The method identifies large negative peaks where local minima have a height greater than a predetermined threshold. Further, the method comprises assessing the negative peaks for removal and replacing each removed negative peak with a linear interpolation between the pixel previous to the peak and the next pixel after the peak.

BRIEF DESCRIPTION OF DRAWINGS

Fig. 1 is a schematic illustration of a system, not covered by the appended claims, for collecting and filtering spectral data for subsequent analysis of the filtered spectral data, according to various aspects of the present invention;

Fig. 2 is a schematic illustration of select components of the processing device of Fig. 1, where the processing device includes a computer readable storage medium having computer readable program code to implement one or more of the filters described more fully herein;

Fig. 3 is a flow chart illustrating a cosmic spike filter executable by the processing device of Fig. 1 and/or Fig. 2, according to examples useful for understanding the present invention;

Fig. 4 is a graph of an illustrative Raman spectrum, designated as Replicate 1, that may be obtained using the system of Fig. 1, where the spectrum exhibits a noise spike around pixel number 713;

Fig. 5 is a graph of an illustrative Raman spectrum, designated as Replicate 2, which is obtained from the same exemplary sample and sample location associated with Replicate 1 illustrated in Fig. 4, where the spectrum of Replicate 2 exhibits a noise spike around pixel number 730;

Fig. 6 is a graph of the Raman spectrum illustrated in Fig. 4, which has been smoothed using the cosmic spike filter of Fig. 3, according to various examples useful for understanding the present invention;

Fig. 7 is a graph of the standardized residual between Replicate 1 illustrated in Fig. 4, and the smoothed Raman Spectrum illustrated in Fig. 6, according to examples useful for understanding the present invention;

Fig. 8 is a close up view of the graph of Replicate 1 illustrated in Fig. 4, in the pixel range 700-750, demonstrating that the cosmic spike centered at 713 extends from approximately pixels 712-714;

Fig. 9 is a graph illustrating the sum of Replicate 1 and Replicate 2, before filtering according to examples useful for understanding the present invention;

Fig. 10 is a graph illustrating the sum of Replicate 1 and Replicate 2, after providing the filtering of Fig. 3, according to various examples useful for understanding the present invention;

Fig. 11 is a graph of an exemplary Replicate, designated "Replicate 1", having a tall, narrow feature centered approximately, at pixel 453;

Fig. 12 is a graph of an exemplary Replicate, designated "Replicate 2", having a tall, narrow feature centered approximately, at pixel 453;

Fig. 13 is a graph illustrating the Replicate of Fig. 11 and the Replicate of Fig. 12 overlaid and zoomed in on the region around pixel 453;

Fig. 14 is an ideal graph of six pixels of data from eight sequentially collected replicates of an exemplary clean signal for purposes of illustration of various aspects of the present invention;

Fig. 15 is a graph illustrating an average of the signal intensity of the eight replicates of Fig. 14, averaged per pixel, according to various aspects of the present invention;

Fig. 16 is a graph illustrating six pixels of data from eight sequentially collected replicates of an exemplary signal where noise spikes appear in three pixels for purposes of illustration of various aspects of the present invention;

Fig. 17 is a graph illustrating an average of the signal intensity of the eight replicates of Fig. 16, averaged per pixel, comparing actual to predicted values, according to various aspects of the present invention;

Fig. 18A is a flow chart illustrating a cosmic spike filter according to further aspects of the present invention;

Fig. 18B is a flow chart illustrating an exemplary approach to performing replicate processing of the method of Fig. 18A;

Fig. 18C is a flow chart illustrating an exemplary approach to performing pixel processing of the method of Fig. 18A;

Fig. 18D is a flow chart illustrating an exemplary approach to performing final filtering of the method of Fig. 18A;

Fig. 19 is a graph illustrating the six pixels of data from eight sequentially collected replicates of the noisy signal of Fig. 16, where the identified noise spikes are removed and are replaced with predicted values, according to various aspects of the present invention;

Fig. 20 is a graph illustrating the eight replicates of Fig. 19 averaged per pixel, according to various aspects of the present invention; and

Fig. 21 is a flow chart illustrating a negative peak filter according to various examples useful for understanding the present invention.

MODES FOR CARRYING OUT THE INVENTION

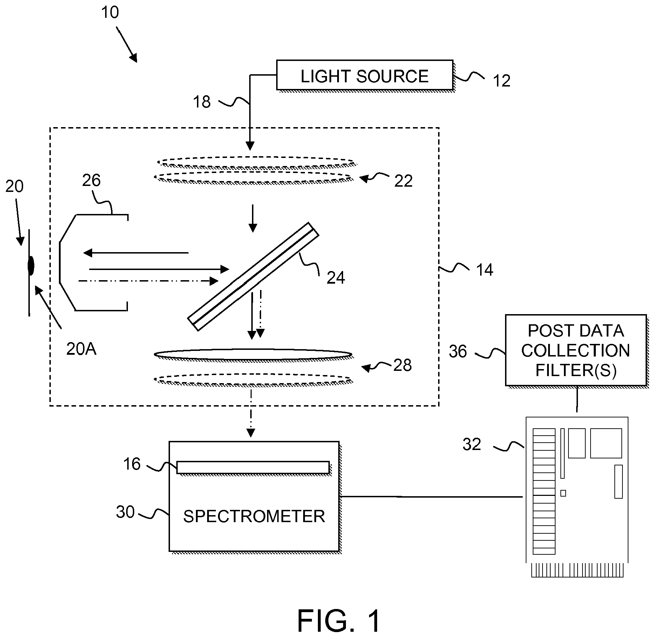

With reference generally to Fig. 1, detection of biological and chemical materials can be accomplished using an imaging system 10. For purposes of illustration, the imaging system 10 includes in general, a light source 12, optics 14 and at least one image output device 16.

Exemplarily, the light source 12 comprises a high intensity laser capable of generating a laser beam 18 having a narrow spectral bandwidth. In an example, the optics 14 comprise one or more optical components, such as lenses, reflection surfaces, and/or other optical devices necessary to direct the laser beam 18 towards a sample area 20. For instance, as illustrated, the laser beam 18 passes through one or more optional lenses and/or reflection surfaces 22, which direct the laser beam 18 along a first optical path, towards an optical device 24 such as a long pass dichroic mirror. Light from the laser beam 18 is redirected by the optical device 24 along a second optical path that is orthogonal to the first optical path so as to pass the laser beam 18 through an objective 26. The objective 26 serves to focus the laser beam 18 onto the sample within the sample area 20.

The sample area 20 may include a sample collected using a suitable sampler. In illustrative implementations, the sampler comprises an aerosol collector, such as a small area electrostatic aerosol collector. Such a small area electrostatic aerosol collector deposits a sample drawn from the ambient air onto an interrogation region 20A, e.g., a sample substrate within the sample area. In alternate implementations, other samplers and/or sampling techniques are utilized to collect a suitable sample for interrogation. For instance, in illustrative implementations, the sampler comprises a sample dispenser such as a micro liter liquid sample dispenser. As such, depending upon the collection technique implemented, the sample can be taken from the ambient air, from a water supply or other source, from an environmental sample, medical diagnostic sample, product, material or component sample, etc.

Regardless of the sample collection technology, the sample in the interrogation region 20A of the sample area 20 is illuminated by the light source 12. Scattered and dispersed light is collected from the sample area 20 back through the objective 26 along a third optical path that is generally opposite in direction of the second optical path. In this regard, the interaction between the laser light and the sample collected in the sample area 20 leads to Raman scattering of light that is shifted in wavelength from the light source 12. As such, the light directed along the third optical path includes elastic incident photons and inelastically scattered photons due to Raman scattering.

The light along the third optical path is redirected by the optical device 24 along a fourth optical path. As the light is directed along the fourth optical path, the inelastically scattered photons are separated from the elastic incident photons, e.g., using at least one appropriate filter device 28, e.g., a longpass filter, a bandpass filter, etc., such that the inelastically scattered photons are passed to a spectrometer 30 and a processing device 32, which implements one or more spike filters as described in greater detail herein.

For example, in several examples not covered by the claims, the spectrometer 30 includes a spectrometer grating that passes the filtered light to the image output device 16, e.g., a two dimensional charge coupled device (CCD). The divergence in angles of the light exiting the grating causes light at different wavelengths to arrive on different pixels of the CCD so as to capture spectral data representative of the Raman spectrum of the particle under interrogation. Thus, the image output device 16 receives inelastically scattered photons to output information regarding the sample interrogated on the sample substrate.

The imaging system 10 can implement any spectroscopic measurement system such as for Raman, infrared, atomic, visible, microwave and ultraviolet spectroscopy. For instance, in numerous examples, the optics 14 comprise various combinations of filters, beam splitters, lenses, mirrors, and other devices. Moreover, even though CCD devices are commonly used for various types of spectroscopic measurements, in some examples, other devices are used to capture spectral information.

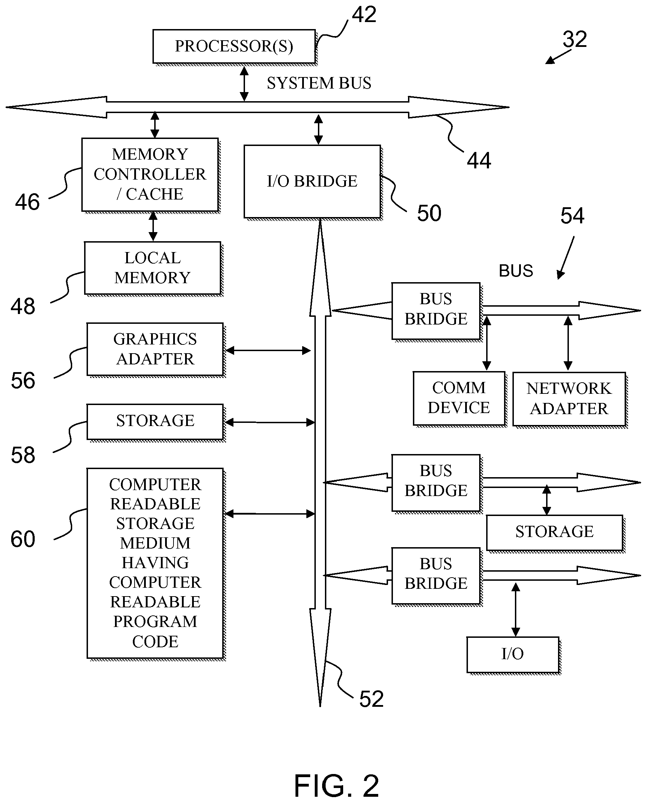

Referring to Fig. 2, a block diagram of an exemplary implementation of the processing device 32 is depicted.

The processing device 32 comprises one or more processors 42 connected to a system bus 44. Also connected to the system bus 44 is a memory controller/cache 46, which provides an interface to local memory 48. In several implementations, an I/O bus bridge 50 also connects to the system bus 44 to provide an interface, e.g., to an I/O bus 52. The I/O bus 52 is utilized to support one or more busses and corresponding devices 54, such as bus bridges, input output devices (I/O devices), storage, network adapters, etc. In some embodiments, devices such as, but not limited to, a graphics adapter 56, storage 58 and a tangible computer readable storage medium 60 having computer readable program code embodied thereon are connected to the I/O bus 52. The processor 42 executes the computer readable program code to implement any aspect of the present invention, for example, to implement the filter(s) 36 and/or any aspect of any of the filtering methods described and set out more fully herein.

The architecture and features of the processing device 32 are presented by way of illustration and not by way of limitation. In that regard, the processor 32 may have an alternative architecture and/or features to that described with reference to Fig. 2. Moreover, the processing device 32 need not be physically linked to the image output device 16. Rather, the imaging system 10 could collect data that is stored for subsequent processing by the processing device 32, whether integrated with the imaging system 10, located off-line, off-site or otherwise, so long as the processing device 32 can implement the filters as described more fully herein.

The Raman spectra collected from the image output device 16, e.g., a CCD device, are susceptible to showing spikes of random noise features caused by cosmic rays and other disturbances. These disturbances are also often referred to as 'cosmic spike' noise because the noise can be caused by the interaction of cosmic rays with the CCD pixel elements. However, as used herein, the term 'cosmic spike' or more generally, 'noise spike', refers generally to any random spike, noise spike, cosmic ray interference or other disturbance spike in spectral data.

Cosmic spike noise is generally random, and thus can affect any pixel element of a sensor within the CCD device. Accordingly, cosmic spike noise can distort the true signal and can thus interfere with spectral analysis and classification. By way of example, a Raman spectrum can be represented by a plurality of adjacent intensity signals aligned along a row thus defining a one dimensional array of pixels. However, a cosmic ray at the time of sensor reading can corrupt the true spectrum by producing a large spike that affects one or more of the measured intensity values. Such a cosmic spike can generate intensity values that are 10 times higher, or more, than other nearby intensity values. Moreover, each cosmic spike of interference can typically contaminate a number of pixels, e.g., 1-4 consecutive pixels in an illustrative example.

*I. Two-Replicate Cosmic Spike Filter for Raman Spectra*

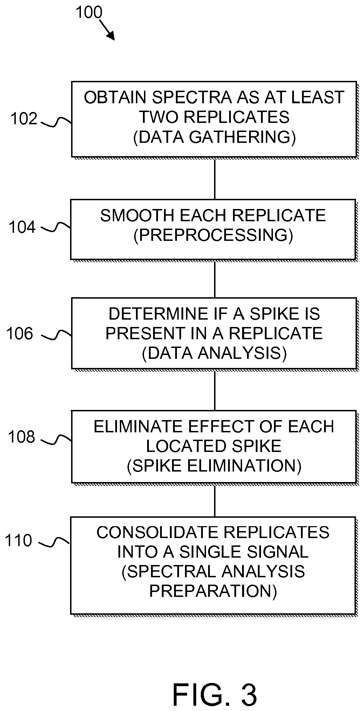

Referring to Fig. 3, in an example useful for understanding the present invention, a method of locating and removing spike noise, e.g., cosmic disturbances and other spikes features, from spectral data is provided. The method of Fig. 3 performs cosmic spike filtering by locally smoothing a raw replicate without using outlier signal intensity values identified in the collected spectrum. In some examples multiple replicates are collected. In this regard, the resultant locally re-smoothed replicates are summed, combined or otherwise merged to yield a single spectrum that is free of cosmic spikes.

The method 100 defines a cosmic spike filter (CSF), which may be implemented as the filter 36 executed by the processing device 32 of Fig. 1 and/or the filter 100 may be implemented by the processor 42 executing instructions stored in the tangible computer readable storage medium 60 illustrated in Fig. 2. According to various examples useful for understanding the present invention, the filter 100 can be used to filter spectral data affected by sharp noise spikes, such as those that are a few pixels, e.g., one to four pixels in width, which may occur in measurements from CCD arrays.

In general, the method 100 can be conceptually organized as data gathering, data preprocessing, data analysis, spike elimination (where applicable) and spectral analysis preparation.

The data gathering aspect of the method comprises obtaining spectra comprising two or more replicates at 102. That is, a spectrum is collected at least two discrete times, from a given sample at a given sample location. Data characterizing the measurement of each captured spectrum defines a replicate of the spectrum, i.e., an instance of a spectrum measurement taken at a selected location of a given sample. For instance, in illustrative implementations, the image output device 16 as described with reference to Fig. 1, is implemented as a CCD device that is utilized to capture a measurement of a Raman spectrum two or more times.

In an illustrative example, the cosmic spike filter 100 obtains the Raman spectra in pairs of replicates. If noise is introduced each time a replicate is read from the CCD array, then requiring only a low number replicates reduces the amount of noise introduced into the system. In an illustrative implementation, the cosmic spike filter 100 is able to detect and remove narrow noise spikes, e.g., spikes that are one to four pixels in width, and which are spaced more than one filter width apart. Furthermore, utilizing two replicates improves the accuracy of the spike detection process compared to when only one replicate is used, as will be described in greater detail herein.

Keeping with the above example, the method 100 obtains a first raw replicate of spectral data, designated herein as Replicate 1, where the first raw replicate represents a first instance of spectral data collected from a sample under interrogation, e.g. a sample in the interrogation region 20A of the sample area 20 illustrated in Fig. 1. Similarly, the method 100 obtains a second raw replicate of spectral data, designated herein as Replicate 2, where the second raw replicate represents second instance of spectral data obtained from the (same) sample under investigation at the same sample location. For instance, in several examples Replicate 2 represents spectral data collected at a subsequent point in time from the same sample in the interrogation region 20A of the sample area 20 illustrated in Fig. 1, under the same conditions utilized to capture Replicate 1. Thus, in an illustrative implementation, Replicate 1 and Replicate 2 are captured using the same settings and parameters used to configure the light source 12, optics 14 and image output device 16.

Data preprocessing may be optionally performed on the gathered data. For instance, in illustrative implementations, each replicate is smoothed at 104. By way of illustration, smoothing is implemented by computing a first smoothed replicate from the first raw replicate and by computing a second smoothed replicate from the second raw replicate. In exemplary implementations, keeping with the above example, the processing device 32, e.g., via the microprocessor 42, executes computer readable program code stored in the tangible computer readable storage medium 60 to implement a quadratic least-squares procedure at 104, to compute the first smoothed replicate from the first raw replicate and to compute the second smoothed replicate from the second raw replicate.

Data analysis is performed to locate and identify features that are determined to be spike noise. For instance, a determination is made at 106 as to whether at least one noise spike is present in each of the first and second replicates. Keeping with the above example, the processing device 32, e.g., via the microprocessor 42, executes computer readable program code stored in the tangible computer readable storage medium 60 to determine whether at least one noise spike is present in each of the first and second raw replicates by comparing select ones of the first raw replicate, the first smoothed replicate, the second raw replicate and the second smoothed replicate. The comparison is described in greater detail in reference to section I.B. below. In this regard, noise spikes are located (if present) in each replicate. In illustrative implementations, noise spikes are located using a two-pass approach to find outliers. In many examples, additional processing is also performed on the results of this two-pass approach to return a final list of outliers that represent spike noise.

Upon identifying spike noise within Replicate 1 and/or Replicate 2, a noise spike elimination operation is performed at 108. In exemplary implementations, the processing device 32, e.g., via the microprocessor 42, executes computer readable program code stored in the tangible computer readable storage medium 60 to eliminate the effect of each located noise spike in the first and second raw replicates. By way of example, elimination of noise spikes is implemented by correcting the effect of each located noise spike in the first and second raw replicates by locally re-smoothing the corresponding replicate around each located spike, as will be described in greater detail herein.

After removing spike noise, the Replicates are prepared for spectral analysis at 110. In exemplary implementations, the processing device 32, e.g., via the microprocessor 42, executes computer readable program code stored in the tangible computer readable storage medium 60 to consolidate Replicate 1 and Replicate 2 into a single spectrum at 110 that is free of cosmic spikes.

Thus, in exemplary implementations, noise spikes are corrected by identifying spikes as outliers and by locally re-smoothing the corresponding raw replicate without using the outlying values. In some examples, the two resultant locally re-smoothed replicates are summed, combined or otherwise merged to yield a single spectrum that is free of cosmic spikes.

### I.A. Example of Preprocessing a Pair of Replicates

By way of illustration and not by way of limitation, an exemplary implementation of the method 100 useful for understanding the present invention comprises obtaining spectra at 102 by obtaining a pair of raw replicates, designated as Replicate 1 and Replicate 2. Further, smoothing each replicate at 104 comprises using local polynomial regression to calculate replacement values for corresponding spectral values, such as by implementing a Savitzky-Golay filter. The Savitzky-Golay filter can be executed by the processing device 32 of Fig. 1 and/or the processor 42 executing instructions stored in the tangible computer readable storage medium 60 illustrated in Fig. 2.

As an illustration, let $x_1, x_2, ..., x_n$, and $y_1, y_2, ..., y_n$, denote the raw values for Replicate 1 and Replicate 2, respectively. Let $X_1, X_2, ..., X_n$, and $Y_1, Y_2, ..., Y_n$, denote the corresponding smoothed values for Smoothed Replicate 1 and Smoothed Replicate 2, respectively. More specifically, $X_i$ denotes the smoothed value that will replace $x_i$, in the corresponding instance of smoothed spectral data in Smoothed Replicate 1. Similarly, Y, denotes the smoothed value that will replace $y_i$, in the corresponding instance of smoothed spectral data in Smoothed Replicate 2.

For a filter width $m$, the quadratic function $q(x)$ that best fits the $2m+1$ data points $x_{i-m}, ... x_{i+m}$ is calculated by the method of least squares. Under this arrangement, $X_i$ is defined as $q(x_i)$. In numerous embodiments, the quadratic function $q(y)$ that best fits the $2m+1$ data points $y_{i-m}, ... y_{i+m}$ is also calculated by the method of least squares such that $Y_i$ is defined as $q(y_i)$. In many embodiments, the smoothing operation is performed as a convolution method where the convolution coefficients are calculated ahead of time, e.g., before implementing smoothing at 104, to give the effect of performing local quadratic regression.

### I. B. Exemplary Approach to Performing Data Analysis for Locating Spikes Using a Two-Pass Approach

As described above, a determination is made as to whether a noise spike is present in a replicate at 106. In illustrative implementations, noise spikes, if present, are located using a two-pass approach. In general, the two-pass approach is implemented using a first raw replicate (e.g., Replicate 1) and a second raw replicate (e.g., Replicate 2).

A first standardized residual is calculated for the difference between a first raw replicate and a smoothed version of the first replicate (e.g., Smoothed Replicate 1). Pixel numbers corresponding to potential outliers are identified in the first raw replicate where the standardized residual value exceeds a predetermined cutoff value. That is, a potential outlier is declared for each pixel of the first raw replicate where the computed first standardized residual satisfies a predetermined condition.

In the second pass, the first raw replicate (Replicate 1) is compared with the second raw replicate (Replicate 2) at least at the identified pixel numbers corresponding to potential outliers to identify true outliers where the comparison exceeds a predetermined threshold value. As an illustrative example, comparisons can be performed in a neighborhood around potential outliers identified in the first pass. For instance, by comparing the difference between the first and second raw replicates within a filter width (pixel width of the cosmic spike filter) for each pixel declared as a potential outlier, pixels are identified as a true outlier if the difference between corresponding pixel values exceed a predetermined amount. In this manner, official outliers are identified from (discriminated from) the potential outliers.

The above-process is repeated for the second raw replicate. That is, a second standardized residual is calculated for the difference between the second raw replicate and a smoothed version of the second replicate. A potential outlier is declared for each pixel of the second raw replicate where the computed second standardized residual satisfies a predetermined condition. Then, by comparing the difference between the second and first raw replicates within a filter width of each pixel declared as a potential outlier, pixels are identified as a true outlier if the difference between corresponding pixel values of the second and first raw replicates within the filter width exceeds a predetermined amount. Locally re-smoothing is then performed over the first and second raw replicates without using the outlying values.

In some examples, these comparisons are implemented by forming standardized residuals between both the first raw replicate and its smoothed version and the first raw replicate and the second raw replicate. Outliers are identified where the standardized residuals exceed predetermined cutoff values. In this regard, the two-pass approach can be executed by the processing device 32 of Fig. 1 and/or the processor 42 executing instructions stored in the tangible computer readable storage medium 60 illustrated in Fig. 2.

In illustrative implementations, the located true outliers are eliminated by locally re-smoothing the corresponding replicate, e.g., around and including the identified outliers, without using the outlying values. The above two-pass approach is repeated for the second raw replicate. That is, the second raw replicate can be compared with its smoothed version in a first pass, and the second raw replicate can be compared with the first raw replicate in the second pass, in a manner analogous to that set out above.

By way of illustration and not by way of limitation, standardized residuals are formed by calculating:

$$r_i/s = (x_i - X_i)/s$$

In illustrative examples, s is the standard deviation of the residual r. In alternative examples, s is an estimate of the standard deviation, such as:

$$s = (\mu_{75} - \mu_{25})/1.3490$$

where $\mu_{25}$ and $\mu_{75}$ are the first and third quartiles of the distribution of residuals, respectively. A potential outlier at pixel i is identified when $r_i/s > c_1$, for some cutoff value $c_1$.

Notably, the outlier detection method sometimes finds artificial outliers near cosmic spikes. Furthermore, the outlier detection method may not always find all pixels associated with a noise spike or other disturbance of interest. However, according to various examples useful for understanding the present invention, the deficiencies that may manifest in the outlier detection method are overcome by utilizing a second pass in which the raw values of Replicate 1 are compared to the corresponding raw values of Replicate 2. In this regard, a true outlier is declared, for example, by searching within only one filter width of a potential outlier and identifying the potential outlier as a true outlier if the difference between the two replicates at the outlier pixel location is deemed "large enough," e.g., if the difference between the first and second raw replicates at the corresponding pixel location exceeds a predetermined amount. The difference between the two replicates is thus measured in both an absolute and relative sense.

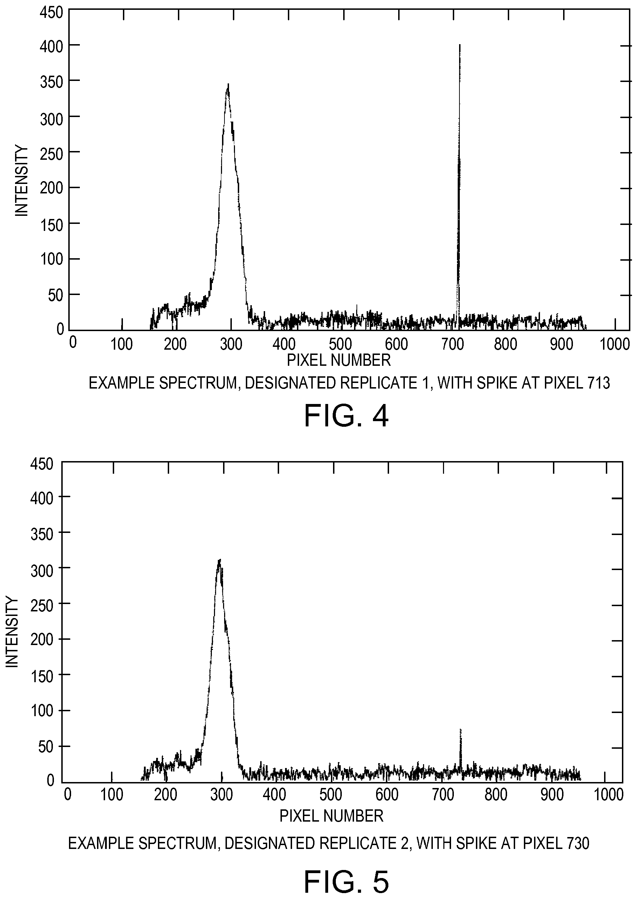

Referring briefly to Fig. 4, a sample spectrum, designated Replicate 1, illustrates a cosmic spike. The cosmic spike noise is illustrated in the spectrum of Fig. 4, as the large, thin spike that appears centered about pixel 713. Referring briefly to Fig. 5, a sample spectrum, designated Replicate 2, is collected from the same sample and sample area of Replicate 1. However, at the time that Replicate 2 is collected, cosmic spike noise creates interference at around pixel 730. With reference to Figs. 4 and 5 generally, cosmic spikes, e.g., centered at pixel 713 of Fig. 4 and pixel 730 of Fig. 5 distort the true signal and can interfere with the analysis and classification of spectral information. Moreover, as illustrated, cosmic spikes can manifest with different signal intensities at different pixel positions.

However, referring back to Fig. 1 and/or Fig. 2, according to various examples useful for understanding the present invention, the processing device 32 (Fig. 1), 42 (Fig. 2) executes one or more filters 36, which include a cosmic spike filter that locates and removes spike noise from the collected spectrum. Accordingly, noise, such as caused by cosmic rays, which is picked up by a detector, is suitably electronically filtered, such as by computer executable program code, e.g., executed by the processing device 32 (Fig. 1), 42 (Fig. 2), thus rendering the filtered spectrum suitable for implementing spectral analysis.

### I. C. Example of Finding Spikes

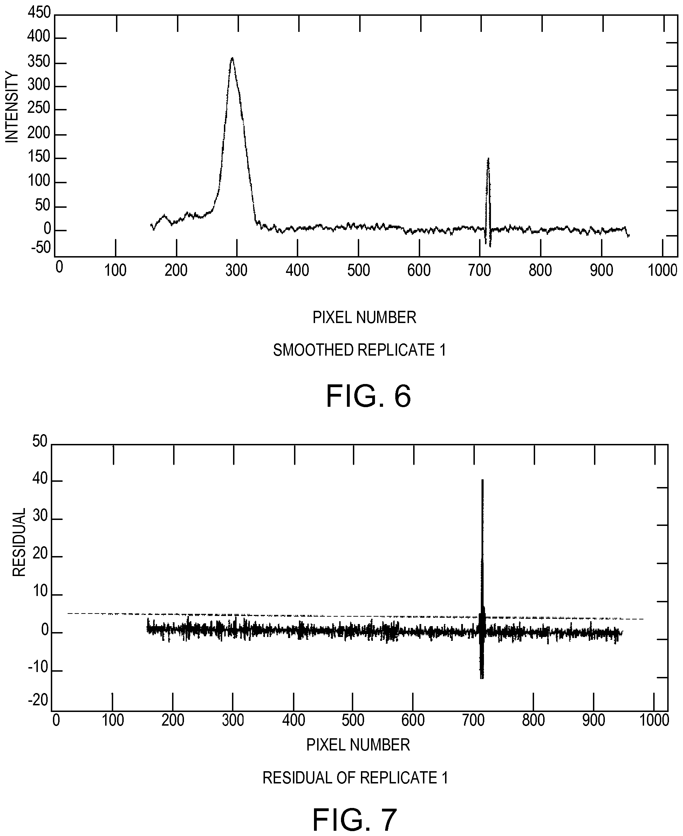

For purposes of illustration of cosmic spike filtering, an exemplary filter with width $m = 4$ and cutoff value $c_1 = 3.5$ is used to filter spectral information. In general, the filter width and/or the cutoff value may be empirically determined. Let Replicate 1 be the spectrum shown in Fig. 4. Further, let Replicate 2 be the spectrum shown in Fig. 5. The results of smoothing Replicate 1 are illustrated in Fig. 6 as Smoothed Replicate 1, e.g., utilizing preprocessing approaches to smoothing described more fully herein, e.g., with reference to preprocessing 104 of Fig. 3. The standardized residual between the original raw replicate (Fig. 4) and the smoothed replicate (Fig. 6) of the spectrum of the current example is illustrated in Fig. 7. In Fig. 7, the cutoff value of $c_1 = 3.5$ is indicated by the dashed line. Using this cutoff value, three pixels are identified as potential outliers, including pixels 709, 713, and 717. With brief reference back to Fig. 4, the exemplary cosmic spike occurs in the original spectrum at pixel 713, or more generally, between pixels 712 and 714. A analogous approach to that set out above is implemented for Replicate 2, and is thus not described in detail herein.

Referring back to Fig. 5, Replicate 2 includes a small spike at 730, but no appreciable spike at 713 as in Replicate 1. Suppose, in the first pass, that a potential outlier is identified in Replicate 1 at pixel i. Then the standardized residual values between the two raw replicates are calculated by:

$$R_i/S = (x_i - y_i)/S$$

In this illustrative example, S can be the standard deviation of the residual R or an estimate of the standard deviation, such as:

$$S = (\mu_{75} - \mu_{25})/1.3490$$

where $\mu_{25}$ and $\mu_{75}$ are the first and third quartiles of the distribution of the $R_i$s, respectively. Searching within only one filter width of pixel $i$ (i.e., for $j = i-m, ..., i+m$), a true outlier is declared if both of the following conditions are satisfied:

$$R_j/S > c_1$$

and

$$R_j/max(1, y_j) > c_2$$

The first condition ($R_j/S > c_1$) evaluates the difference between replicates in an absolute sense. The second condition ($R_j/max(1, y_j) > c_2$) evaluates the difference between replicates in a relative sense, i.e., as a percentage of the Replicate 2 value. The term "max(1, yj)" returns a "1" if $y_j < 1$ and $y_j$ if $y_j \geq 1$. In some examples, a cutoff value of $c_2 = 0.25$ is utilized.

Keeping with the above example, three pixels are identified as potential outliers in Replicate 1, including pixels 709, 713, and 717. However, after processing the second pass of outlier detection, results for Replicate 1 yield outliers at pixels 712, 713, and 714. There are at least two main results of the second pass. First, the potential outliers at pixels 709 and 717 did not pass the conditions of the second pass. Second, the outlier at pixel 713 has been expanded to cover pixels 712-714. That is, the cosmic spike at pixel 713 is supported over three consecutive pixels. For the second pass of the outlier detection method, Replicate 2 acts as a backup for deciding which values in Replicate 1 are truly outliers.

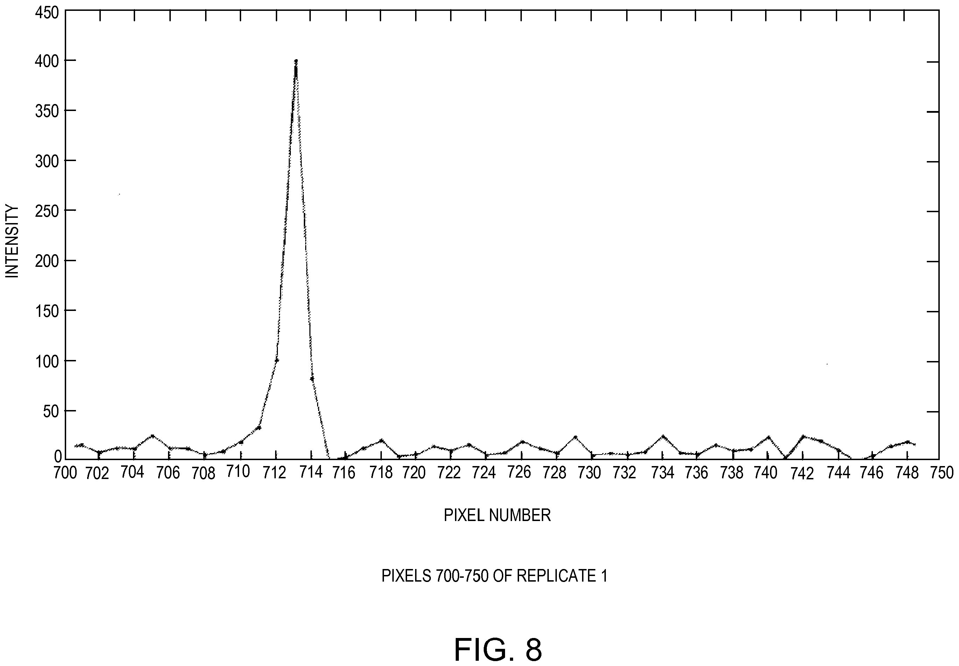

Referring to Fig. 8, a close up of Replicate 1 is illustrated in the range of pixels 700-750. The final results from the outlier-detection method match a cosmic spike at pixels 712-714 and no spikes at pixels 709 and 717.

The spike detection process is repeated for Replicate 2, where Replicate 1 acts as the backup. For the Replicate 2 illustrated in Fig. 7, the first pass of outlier detection produces potential outliers at pixels 296 and 730, but the second pass yields an outlier only at pixel 730. From Fig. 7, a noise spike is identified at pixel 730. In this regard, the spike detection process can be executed by the processing device 32 of Fig. 1 and/or the processor 42 executing instructions stored in the tangible computer readable storage medium 60 illustrated in Fig. 2.

### I. D. Cosmic Spike Elimination

Suppose that Replicate 1 has an outlier at pixel i: that is, at intensity value $x_i$. Then each of the $2m+1$ values smoothed using the value $x_i$ will be contaminated by this outlier. This contaminating effect is removed by recalculating the quadratic functions used in the original smoothing process without using the intensity value $x_i$.

More specifically, the smoothed values $X_{i-m}, ..., X_{i+m}$, have all been contaminated by the value $x_i$. For example, $X_{i-m}$ is obtained by finding the quadratic function q(x) that best fits the data points $x_{i-2m}, ..., x_i$, and then setting $X_{i-m} = q(x_{i-m})$. In the outlier elimination phase, $X_{i-m}$ is recalculated by finding the quadratic function $Q(x)$ that best fits the data points $x_{i-2m}, ..., x_{i-1}$, (i.e., without $x_i$), and then setting $X_{i-m} = Q(x_{i-m})$. This process is repeated for all values $X_{i-m}, ..., X_{i+m}$, and for all other outliers $x_i$.

The outlier elimination process may be extended to cover the cases of two (double), three (triple), four (quadruple), or more consecutive outliers. The basic concept is the same in each case: the best-fit quadratic is recalculated without using the double, triple or quadruple outliers as data points. All contaminated values of the smoothed spectrum are then recalculated using the new quadratic functions. In this regard, the outlier elimination process can be executed by the processing device 32 of Fig. 1 and/or the processor 42 executing instructions stored in the tangible computer readable storage medium 60 illustrated in Fig. 2.

The outlier elimination approach may exhibit a few limitations. For example, in some examples, a noise spike is completely removed only if it occupies a predetermined number of consecutive pixels, e.g., four consecutive pixels or fewer. The elimination method could be further extended to eliminate the effects of $M$ consecutive pixels. However, there would be a degradation in the smoothing as $M$ approaches $2m-2$, and the least-squares problem would be underdetermined when $M > 2m-2$. In general, high intensity noise that covers more than a few consecutive pixels, e.g., four consecutive pixels, should not be considered a noise spike and should be filtered using some other technique. Also, if two separate cosmic spikes occur within m pixels of one another, then it will not be possible to eliminate both noise spikes completely. This can be seen because, while the first cosmic spike is being corrected, the replacement values will still be contaminated by the second spike and vice versa.

The final filtered replicates are smoothed spectra. However, in certain illustrative implementations, the filtering process is modified so that raw intensity values are maintained except in the location of cosmic spikes. The replicates still need to be smoothed initially for use in the spike identification process, but otherwise the smoothed values are discarded. In this regard, identified noise spike intensity values are replaced as described above. In many examples, the decision to keep fully smoothed spectra or not depends on what further analysis will be done on the spectra. For instance, certain analysis techniques include smoothing in a later step. However, it may be undesirable to smooth the spectra twice.

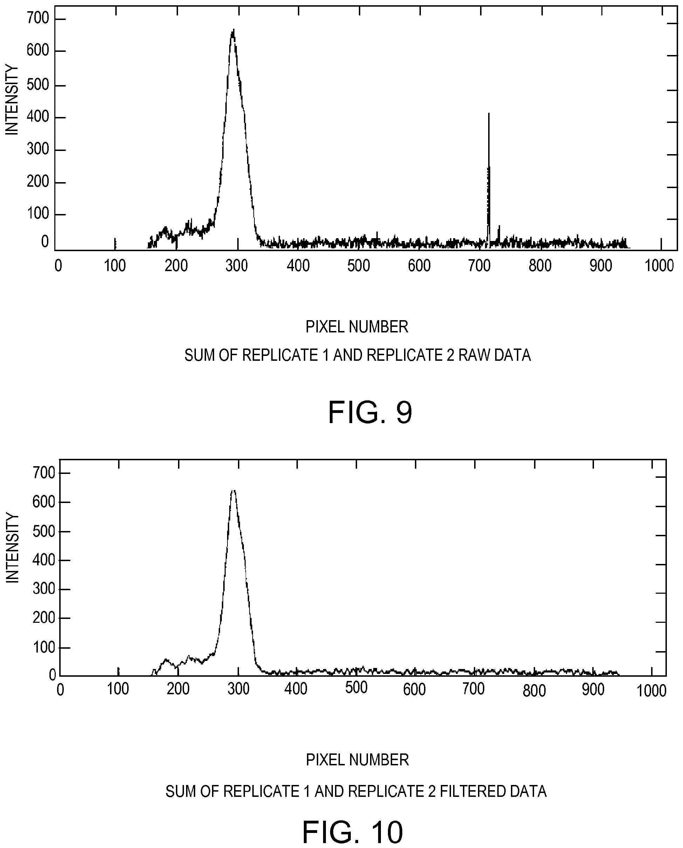

As noted in Fig. 3, the effect of each located noise spike is eliminated at 108, e.g., the outlier elimination process is performed on both Replicate 1 and Replicate 2. Then the replicates are consolidated at 110. For instance, keeping with the original example, the two replicates, Replicate 1 (Fig. 4) and Replicate 2 (Fig. 5), are summed to yield a single set of spectral data that is free from cosmic spikes. Fig. 9 illustrates Replicate 1 and Replicate 2 summed before filtering (with spikes at pixels 712-714 and 730). Fig. 10 illustrates the results of implementing the filter 100 with parameter values $m = 4$ and $c_1 = 3.5$ and $c_2 = 0.25$, where Replicate 1 and Replicate 2 are summed after filtering (with no visible spikes). The spectral data in the plot has been fully smoothed and both cosmic spikes (at 713 in Replicate 1 and 730 in Replicate 2) have been eliminated.

### I. E. Example of Utilizing the Relative Comparison between Replicates

It has been observed that certain spectral features, e.g., that are high-intensity and very narrow, may falsely be identified as cosmic spikes based solely upon an evaluation of the absolute difference between raw replicates because the difference between replicates at the tip of the feature is large in the absolute sense. For this reason, the difference between replicates is also evaluated in a relative sense, as described in greater detail herein.

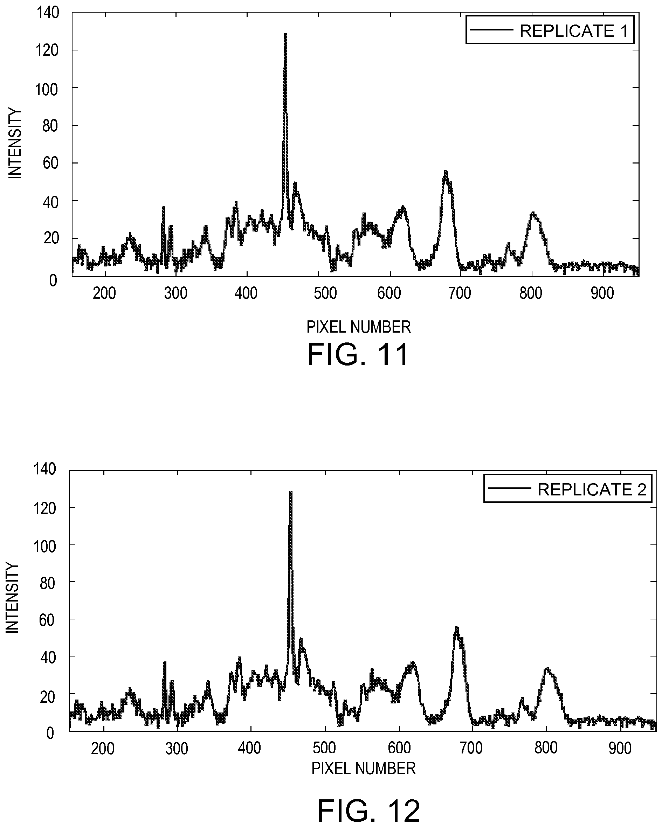

Referring to Figs. 11-13, yet another illustrative example is provided. In this example, assume that two replicates, Replicate 1 illustrated in Fig. 11, and Replicate 2 illustrated in Fig. 12, have been collected as set out in greater detail herein. Moreover, assume that filtering is to be performed on Replicate 1 and Replicate 2 in a manner analogous to that set out herein, e.g., with regard to Fig. 3. The comparison between Replicate 1 and Replicate 2 in an absolute sense alone is not optimal for identifying true outlying pixels. However, the comparison between replicates in a relative sense correctly identifies whether a noise spike exists. Replicates 1 and 2 are plotted in Figs. 11 and 12 respectively. Each replicate exhibits a spike-like feature at pixel 453.

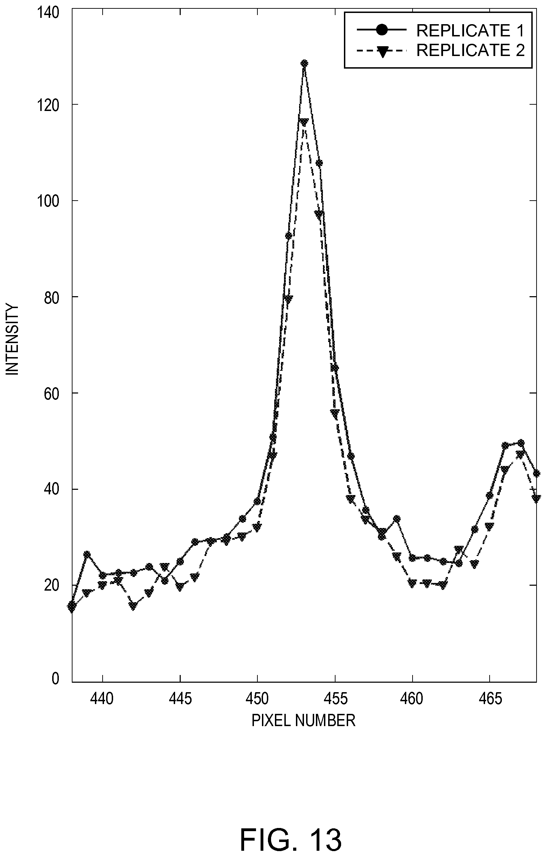

To confirm that this feature agrees between the two replicates and is not a cosmic spike, the two replicates are plotted together in Figure 13. There is a clear alignment between the two replicates around pixel 453. In the second pass of outlier identification, the absolute difference in intensity values at pixels 452 and 453 is large enough that the condition $R_j/S > c_1$ is satisfied. However, the condition $R_j/max(1,y_j) > c_2$ requires that the difference in intensities between the two replicates be at least 25% (for $c_2 = 0.25$) of the Replicate 2 intensity value. The relative difference in intensity values is 16.8% at pixel 452 and 10.4% at pixel 453. Since the relative comparison condition fails, the feature is not classified as a cosmic spike.

### I. F. Additional Observations with Regard to Comparing Replicates

The above-described outlier detection in its various implementations described above, exhibits at least one limitation. If a cosmic spike was to occur at the same pixel in each replicate, then the outlier detection might not detect such a pair of cosmic spikes because the two replicates would agree with each other at those pixels. However, cosmic ray events are rare, and it is highly unlikely for two such events to occur in the same pixel. Other kinds of noise peaks, such as those generated by electronic noise, are more common. However, these kinds of peaks tend to have broader pixel widths relative to cosmic spikes, and are not considered spikes for purposes of cosmic spike filtering herein. In this regard, filtering of electrical noise, etc., should be handled by some other filtering process.

Outliers consisting of too many consecutive pixels often represent noise features that are not spikes. Therefore, a designated spike feature is limited to a small fixed number of pixels (spike width). Any spikes that consist of more than a predetermined spike width threshold, e.g., four consecutive pixels in an illustrative example, are not considered spike noise for purposes of cosmic spike filtering herein. For purposes of clarity of discussion herein, the number of pixels has been limited to about three to four pixels. However, this number is for illustration only. In practice, the specific number of pixels used to define a maximum spike width can vary.

*I. G. Gap Filling*

Situations can arise where outlier pixels are spaced by a small "gap". In this regard, it may not always possible to completely remove the effects of a noise spike of interest. Accordingly, "gap filling" may be performed as part of the data analysis process at 106 of Fig. 3.

By way of illustration, assume that there is an outlier spike within m pixels of a spike of interest, where m is a relatively small number, e.g., smaller than the pixel width of typical cosmic spikes. According to illustrative implementations, the gap of m pixels between spikes is filled in and then "overlapping" spikes are removed. Assume for example, that pixels 123, 124, and 126 are identified as outliers. The naive approach would be to view these pixels as a two-pixel spike spaced by one pixel from a one-pixel spike. However, it may not be possible to remove two spikes that are so close together (spaced by a single pixel in this example). In this regard, a better result is obtained by designating pixel 125 as an outlier pixel. Accordingly, pixels 123—126 in this illustrative example, are treated as one spike that is four pixels wide.

A missing pixel, such as pixel 125 in the above example, can often reasonably be considered as part of the noise spike, even where pixel 125 fails to be characterized as an outlier. For instance, due to the particular attributes of two raw replicates (Replicate 1 and Replicate 2), the conditions for identifying a pixel as an outlier by evaluating the difference between the raw replicates may fail to be satisfied at that pixel.

In many examples, missing pixels are filled using an appropriate rule. For instance, in several examples, a pixel gap is determined to be eligible to be filled if the total spike width (after filling gaps) does not exceed a predetermined number of consecutive pixels, e.g., four pixels.

According to further illustrative implementations useful for understanding the present invention, missing pixels are filled in by recognizing that there can sometimes be more than one possibility for filling in a pixel gap and by giving higher priority to pixels that correspond, for example, to a larger mean $R_j = X_j - Y_j$ over the resulting spike. The utilization of the larger mean $R_j$ is provided by way of illustration and not by way of limitation.

In this regard, other possibilities may be utilized for filling in a pixel gap. For example, in illustrative implementations, if pixels 103, 105, 106, and 108 are identified as outliers, and a rule says that the largest spike can be four pixels, a cosmic spike processing algorithm, e.g., as implemented during the data analysis processing at 106 of Fig. 3, chooses to fill in pixel 104 if the mean of $R_{103}$-$R_{106}$ is larger than the mean of $R_{105}$-$R_{108}$. As another example, the cosmic spike signal processing algorithm fills in pixel 107 if the mean of $R_{105}$-$R_{108}$ is larger than the mean of $R_{103}$-$R_{106}$. In this regard, the gap filling cosmic spike signal processing algorithm can be executed by the processing device 32 of Fig. 1 and/or the processor 42 executing instructions stored in the tangible computer readable storage medium 60 illustrated in Fig. 2.

In addition to filling in pixel gaps where possible, in numerous examples, some spikes are removed from consideration if they occur too close to other spikes. Two spikes are considered to be too close together, for example, if the end pixels of each spike are within *m* pixels of each other. Since it will not be possible to fix both such spikes, the lesser spike should be ignored so that the more severe spike can be removed successfully. There are a number of possibilities for deciding which spike is more severe and should be correspondingly passed on for spike elimination. In an illustrative example, a decision of which spike is more severe and will be passed on to the elimination part of the process is determined by the values of $R_j$. The spike with the higher maximum value of $R_j$ is retained for further processing while the other spike is dropped from consideration.

*I. H. Using More Than Two Replicates*

Various aspects are designed to act on Raman spectra collected in pairs, e.g., as Replicate 1 and Replicate 2 as described more fully herein. However, it is possible to collect additional replicates and combine the collected data into two master replicates e.g., by summing the data. The total Raman integration time should be the same for each of the master replicates so that the intensity values between the replicates is comparable. Furthermore, in many examples, multiple replicates are collapsed down to two master replicates by summing the collected replicate data in an alternating sequence. For example, if 8 replicates are collected, then Replicate 1 would be the sum of the collected replicates 1, 3, 5, and 7, and Replicate 2 would be the sum of the collected replicates 2, 4, 6, and 8. This practice reduces the chances of a spectral feature being classified as a spike because the intensity of the feature decayed sufficiently between the first half of the replicates and the second half.

According to various aspects, the filter 100 finds cosmic spikes primarily in the pixel dimension as opposed to the time dimension. The exemplary filter 100 uses at least two time replicates. An advantage to using relatively few replicates is that there is less contribution to the overall spectral data (the sum of the replicates) from CCD read error, which is constant for each replicate used. The second replicate serves to improve the spike detection process. Moreover, the spike elimination process has been extended to handle spikes of consecutive pixels, e.g., four consecutive pixels.

## II. Cosmic Spike Filter Based Upon Multiple Replicate Spectra

According to aspects of the present invention a data collection approach is provided that is implemented in combination with a statistical approach to removing cosmic spike noise from the collected spectral data without distorting the true spectral data.

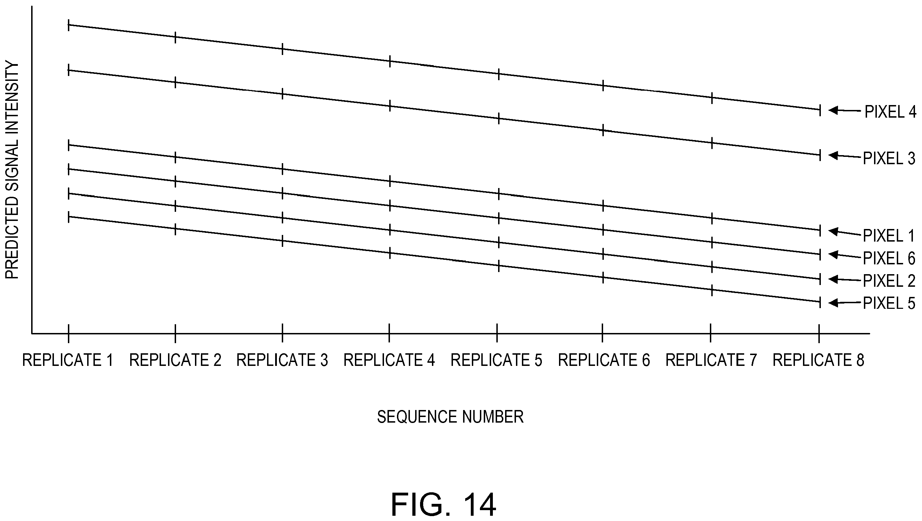

Referring now to Fig. 14, ideal clean spectral data is free of noise spikes. For instance, assume that spectral data is acquired from a sensor array, such as a CCD component of the image output device 16 as described with reference to Fig. 1. The illustrated plot characterizes an array of six pixels numbered sequentially, 1-6, which are read out eight times in sequence to derive Replicate 1 through Replicate 8 for each pixel. Signal values are plotted on the ordinate as a function of sequence numbers representing Replicate 1 through Replicate 8 plotted on the abscissa. In this manner, a "tick" mark is utilized to identify an ideal, value, not contaminated by cosmic spike noise.

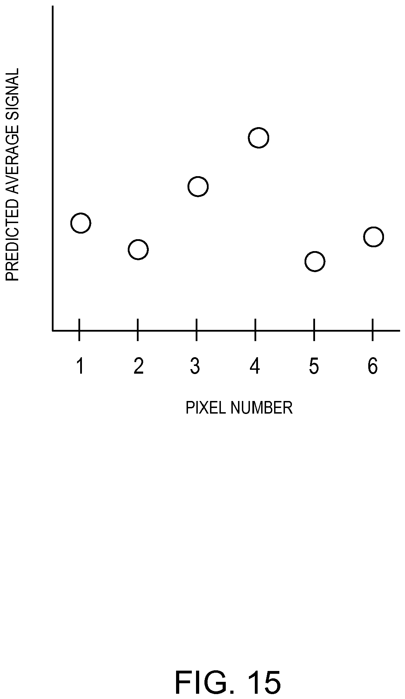

Referring to Fig. 15, the eight signal values for each pixel are averaged. That is, the signal value for each replicate 1-8 at a corresponding pixel number is averaged to produce an ideal average pixel value (represented by a circle in the plot), thus identifying the relative signal intensity in each pixel. In Fig. 15, the averaged signal value (for each pixel number) is plotted on the ordinate and the pixel number is plotted on the abscissa.

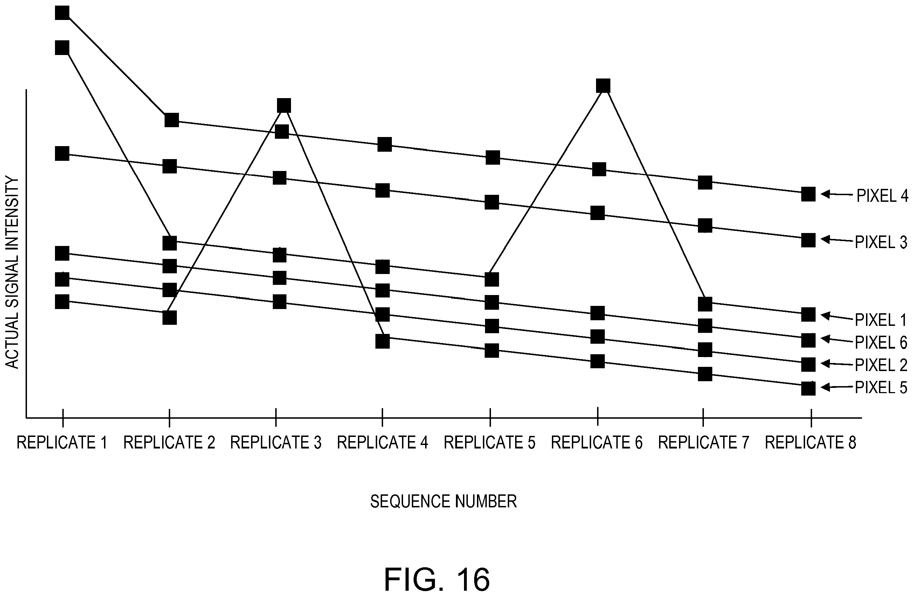

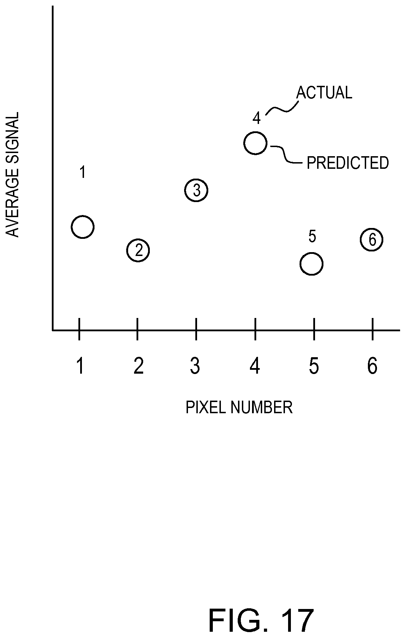

Referring to Figs. 16 and 17, actual practical measurements may deviate from an ideal clean signal due to spike noise, as described more fully herein. The actual raw data is identified by solid fill rectangular markers. In this regard, an idealized value is distinguished by a tick (Fig. 14) compared to an actual raw value distinguished by a solid fill rectangle (Fig. 16).

More particularly, the approach of simple averaging may result in the collected data being affected by noise spikes, which are localized in time. Figs. 16 and 17 illustrate exemplary spectral information for eight replicates, which may include noise. The eight replicates can be gathered using any suitable techniques, including capturing the spectra using a CCD device, as described more fully herein, e.g., with regard to Figs. 1 and 2. In this regard, as noted in greater detail herein, each replicate 1-8 comprises an instance of the spectrum collected for a given sample at a given sample location.

For instance, as illustrated in Fig. 16, which plots signal values on the ordinate as a function of sequence numbers representing Replicate 1 through Replicate 8 on the abscissa, the localized noise spikes can begin and end in a time shorter than the time between replicate read-outs. In the illustrative example, spike noise has affected three of the pixels at different times. More particularly, spike noise has affected pixel 1 during the capture of Replicate 1 and during the capture of Replicate 6. Also, spike noise has affected pixel 4 during the capture of Replicate 1 and spike noise has affected pixel 5 during the capture of Replicate 3.

Referring to Fig. 17, the averaged signal value of the noise infected measurements (for each pixel number) is plotted on the ordinate and the pixel number is plotted on the abscissa. In the plot, the actual averaged signal value is represented by a reference number corresponding to the number of the pixel. The corresponding ideal averaged signal for each pixel is represented by the circle (taken from Fig. 15). As Fig. 17 illustrates, including noisy data into the averaged computations leads to erroneous signal intensity values, as represented by way of the illustrated example at the three affected pixels 1, 4 and 5. That is, in Fig. 17, the effect of noise and the deviation on average signal level caused by spike noise is illustrated for pixel numbers 1, 4 and 5 by locating the pixel number outside its corresponding circle. Correspondingly, the average signal intensity of pixel numbers 2, 3 and 6 is not affected by noise, as represented by positioning the pixel number in its circle, indicating a close correspondence between the actual averaged signal values and expected signal values of a corresponding ideal clean signal.

## II.A. Multiple Replicate Cosmic Spike Filter

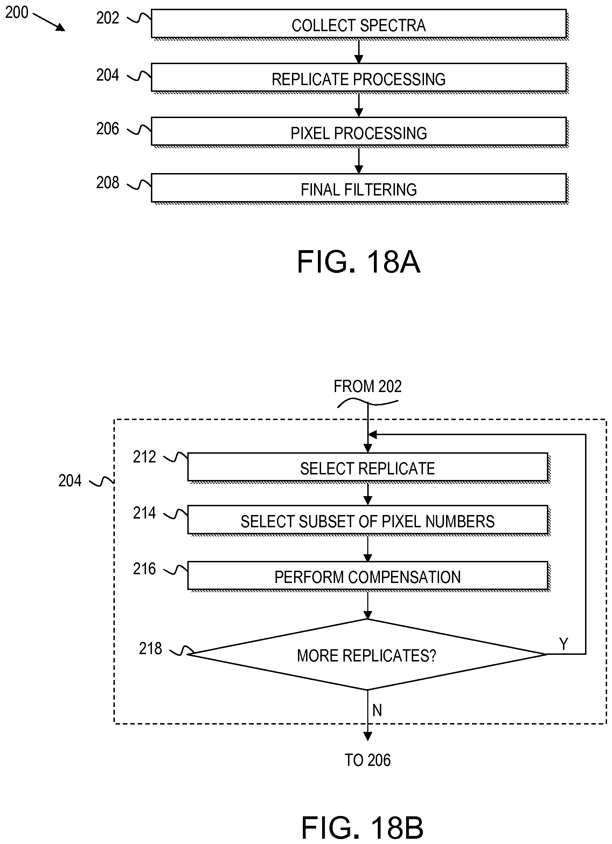

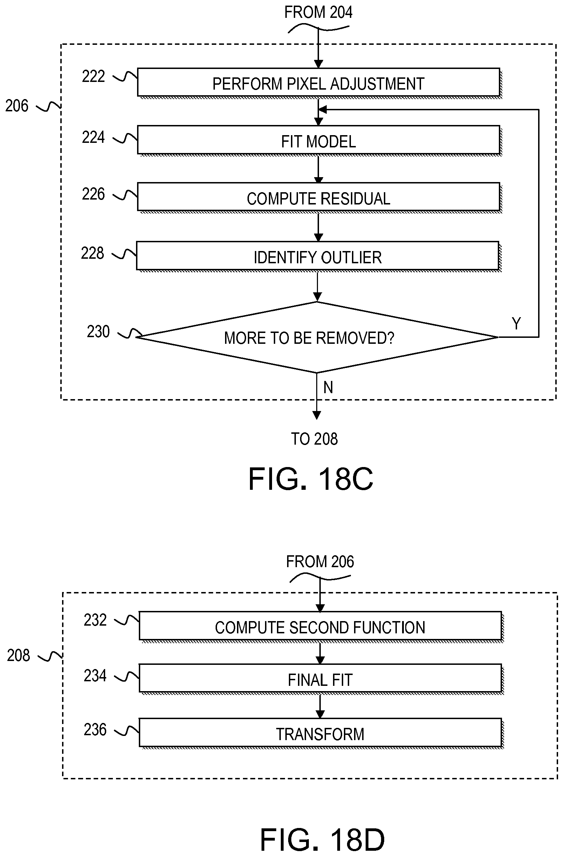

Referring to Fig. 18A, according to various aspects of the present invention, a method 200 is provided for locating and removing cosmic disturbances and other noise spikes from spectral data. The method 200 defines a cosmic spike filter (CSF), which may be implemented as the filter 36 executed by the processing device 32 of Fig. 1 to filter data obtained by the image output device 16. The filter 200 may thus be implemented by executing computer readable program code, e.g., by the processor 42 executing code stored in the computer readable storage medium 60 illustrated in Fig. 2.

Spectra are collected as a plurality of replicates at 202 in a manner analogous to that set out in greater detail herein. For instance, as described in greater detail herein, each collected replicate comprises a plurality of pixels, each pixel having an associated intensity value. In an illustrative example, eight replicates are collected.

As an illustrative example, assume a CCD such as the CCD device described with reference to Fig. 1, is used to capture eight replicates, i.e., spectra collected for the same sample at the same sample location using the same processing conditions. In this regard, each replicate comprises a plurality of pixels, e.g., 1024 pixels. In this regard, in many embodiments, the cosmic spike filter of the method 200 is applied to the raw replicate data, where counts are obtained for the 1024 pixels eight consecutive times. As such, the plurality of replicates represent discrete instances of spectral data obtained sequentially, i.e., over time, from a sample under interrogation.

The method 200 further comprises performing replicate processing at 204 to condition the intensity values of the collected replicates for subsequent pixel processing and spike noise filtering. Further, the method 200 comprises performing pixel processing at 206 to identify outliers corresponding to noise spikes within the plurality of replicates by collectively evaluating the conditioned intensity values of the plurality of replicates as a function of pixel position. Finally, the method comprises performing spike noise filtering at 208 by removing each identified outlier from its replicate and by replacing the removed outlier value with a computed approximation of an intensity value of a noise-free signal at that removed outlier pixel position.

Referring to 18B, an exemplary detailed method of performing replicate processing at 204 is illustrated. In this regard, processing as described below may be implemented as part of the filter 36 executed by the processing device 32 of Fig. 1. Moreover, the above process may be implemented by executing computer readable program code, e.g., by the processor 42 executing code stored in the computer readable storage medium 60 illustrated in Fig. 2.

In general, a loop is performed to prepare the collected replicate data for spectral processing. In the illustrated method, one of the replicates is selected at 212. A subset of pixel numbers from the selected replicate is optionally selected at 214. The subset of pixel numbers may include the entirety of pixels collected, or the subset may include less than the entirety of pixels. By way of illustration and not by way of limitation, the subset of pixel numbers comprises a limited range of pixels, e.g., pixels 163 to 943 of 1024 total pixels. In practice, the subset need not be limited to a single range or contiguous range of pixels. Rather, the subset can comprise any one or more pixels of a corresponding replicate.

In several embodiments, an optional compensation is performed at 216, e.g., for pixels that satisfy a predetermined condition. Compensation is used to compensate for pixel intensity values that are invalid for subsequent pixel processing and spike noise filtering, e.g., to prepare, limit, compensate, adjust or otherwise configure the values of pixels for subsequent processing as described more fully herein. A decision is made at 218 as to whether there are more replicates for processing. If all of the replicates have been processed, the replicate processing is complete. Otherwise, flow loops back to 212 to select a next replicate.

Referring to 18C, an exemplary detailed method of pixel processing at 206 is illustrated. In this regard, processing as described below may be implemented as part of the filter 36 executed by the processing device 32 of Fig. 1. Moreover, the above process may be implemented by executing computer readable program code, e.g., by the processor 42 executing code stored in the computer readable storage medium 60 illustrated in Fig. 2.

Pixel adjustments are performed at 222 to transform the replicates by adjusting the intensity values of the plurality of replicates based upon a predetermined function. For instance, a first function is computed over at least the selected subset of pixel numbers. In an illustrative example, the spectral data is predicted to decay exponentially over time. As such, the function comprises computing the logarithm base-e of the intensity (hereinafter "log(intensity)") at least for each pixel in the selected subset. Through this example, a curve with exponential decay is transformed into a linear curve to facilitate spike elimination. In numerous embodiments, for each replicate processed, the same subset of pixels is utilized, e.g., pixels 163 to 943 of 1024 total pixels. In this way, the first function, e.g., log(intensity) of each pixel in the subset of each replicate is calculated to implement an exponential to linear curve transformation over each replicate.

In an illustrative implementation, the optional compensation performed at 216 (Fig. 18B) is configured to prepare the pixel values for logarithmic processing at 222. For instance, because the logarithm of zero or a negative number is invalid, if the intensity of each computed pixel in the illustrative example is less than or equal to zero (0), the compensation at 208 sets the value to some small positive number, e.g., 0.0001. Other compensations may alternatively be implemented.

In exemplary implementations, the pixel adjustment at 222 also comprises mean centering the pixel values, such as by subtracting the mean log(intensity) from the (optionally compensated) log(intensity) values for each pixel of the subset.

At least one replicate is then identified as an outlier and is removed (if necessary) for each pixel location within the subset. In general, outliers are identified by fitting a first model at 224 to the transformed replicates that models each pixel location as a function of replicate and adjusted intensity value, computing for each pixel, a residual at 226 for each replicate and identifying whether an outlier exists at 228 for each pixel. Identifying whether an outlier exists is performed by identifying the replicate having the maximum residual value for each pixel location and declaring the pixel location for the replicate having the maximum residual value at each pixel location an outlier if the value of that maximum residual is greater than a predetermined threshold. If an outlier is identified, the intensity value of that outlier can be replaced with a predicted value of that pixel position from the first model.

By way of illustration, in some embodiments, replicates are removed by fitting a first model to the adjusted pixel data for each pixel by replicate at 224. For instance, a linear model is fit to predict log(intensity) values by replicate number, e.g., with a constant slope and intercept across all replicates per pixel in the corresponding subset. A residual is computed at 226 and outliers, if present, are then identified at 228 based upon the computed residual. For instance, referring back to Figs. 14 and 15, an idealized linear model of pixel values as a function of replicate (Fig. 14) or pixel (Fig. 15) is illustrated for a subset of six pixels for purposes of illustration and clarity of discussion.

Comparatively, as illustrated in Fig. 16, each replicate may have one or more pixels that may comprise cosmic spike noise as illustrated by the "spikes" in the model curve for each pixel. In this regard, for each pixel under consideration, the replicate with the maximum residual is removed or replaced with its predicted value if a value of that residual is greater than a predetermined threshold.

As an example, for each replicate at each pixel within the corresponding subset, a Studentized residual is calculated. The Studentized residual is considered a residual divided by a standard error, e.g., residual divided by an estimate of its standard deviation. For each pixel, the replicate with the maximum residual is identified as an outlier at 228 and is removed or replaced with its predicted value (e.g., taken from the model at 224) if a probability, e.g., statistical p-value for that residual, is greater than a predetermined threshold. In an exemplary implementation, the threshold is a value such as 0.05.

A decision is made whether any additional residual processing is desired at 230. If additional processing is required, the flow loops back to re-fit a new model at 224 in view of previous adjustments to the replicate data, to compute residuals at 226 and to replace the value of the replicate having the maximum residual with its predicted value (e.g., taken from the new model at 224) if a probability for that residual is greater than a predetermined threshold, as set out above. For example, in many embodiments, it is desirable to repeat 224, 226 and 228 a plurality of times, e.g., three or more times to achieve the desired level of processing. Thus, for example, by looping three times, up to three replicates may be removed for each pixel.

By way of illustration, reference is made to Figs. 16, 17 and 18. During processing of a first pass of operations 224, 226 and 228 of Fig. 18C, the method may conclude for pixel 1, that the value of Replicate 6 represents the greatest residual among the replicates. Moreover, the residual for Replicate 6 exceeds the predetermined threshold. As such, the value of pixel 1, Replicate 6 is replaced with a predicted value. Likewise, assume that for pixel 4, the value of Replicate 1 represents the greatest residual among the replicates and that it exceeds the predetermined threshold. As such, the value of pixel 4, Replicate 1 is replaced with a predicted value.

Further, assume that for pixel 5, the value of Replicate 3 represents the greatest residual among the replicates and that it exceeds the predetermined threshold. As such, the value of pixel 5, Replicate 6 is replaced with a predicted value. The process then loops back and repeats a second time. Although not explicitly illustrated in the Figures, with reference to Fig. 17, after the first pass, one will recognize that the (new) actual value of pixel 4 will drop to its predicted value (and subsequently fall within its corresponding circle), the (new) actual value of pixel 5 will drop to its predicted value, and the (new) actual value of pixel 1 will drop closer to its predicted value, but will not yet fall into the circle due to the outlier at pixel 1 in Replicate 1.

In the second loop, assume that for pixel 1, the value of replicate 1 represents the greatest residual among the replicates and that it exceeds the predetermined threshold. As such, the value of pixel 1, Replicate 1 is replaced with a predicted value. Again, although not explicitly illustrated in the Figures, with reference to Fig. 17, after the second pass, the (new) actual value of pixel 1 will drop into to its predicted value.

Referring to 18D, an exemplary detailed method of performing filtering at 208 is illustrated. In this regard, processing as described below may be implemented as part of the filter 36 executed by the processing device 32 of Fig. 1. Moreover, the above process may be implemented by executing computer readable program code, e.g., by the processor 42 executing code stored in the computer readable storage medium 60 illustrated in Fig. 2.

Once identified replicate points (outliers) have been identified as described with reference to Fig. 18C, a second function is computed at 232, e.g., over the subset of pixel numbers for each of the collected replicates. Keeping with the above example, in several embodiments, the second function is implemented by performing a function to mean center the log(intensity) values of the subset of pixels for each pixel at 232.

A final model is fit to the adjusted pixel data by replicate at 234 and necessary pixels are replaced. Fitting a final model at 234 facilitates modeling each pixel location as a function of replicate and intensity value with identified outliers removed, thus representing a noise free signal. As such, the intensity value of each identified outlier can be replaced with the computed approximation of a corresponding intensity value of the noise free signal (approximated by the model), at that removed outlier pixel position.

In an illustrative implementation, a linear model is fit with all identified outlier replicate points removed and replaced with predicted values from the final model. The replaced values are transformed at 236 to their original scale, e.g., by performing the inverse of pixel adjustment processing at 222 during pixel processing. For instance, keeping with the above example of using a logarithm function, the transformed values are transformed back to the original scale by adding the mean log(intensity) that was subtracted out during the adjustment for that pixel and exponentiating the result.

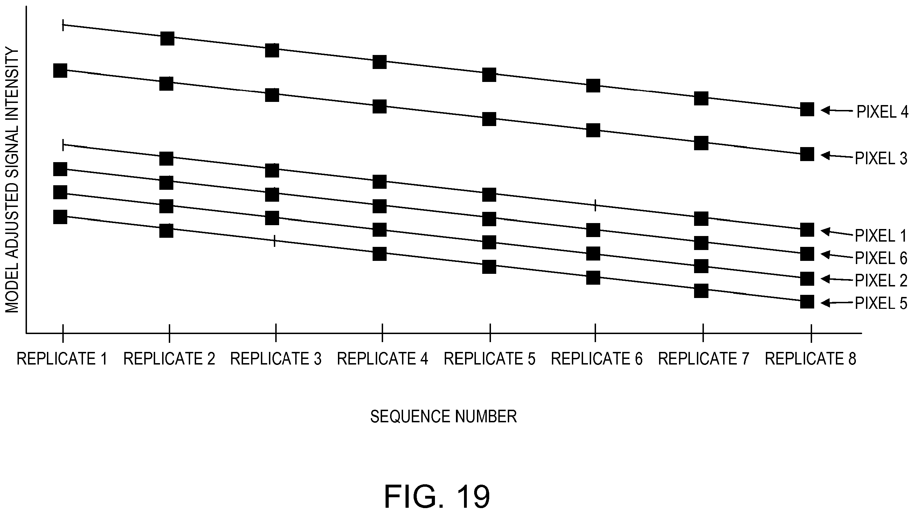

Referring to Fig. 19, the effect of the method 200 illustrated in Figs. 18A-18D, on the noisy data in Fig. 16 is illustrated. For purposes of clarity of discussion, the replicate pixel numbers identified as noise have been replaced with predicted values. This is illustrated by the tick as opposed to the solid fill rectangle at the expected location in Fig. 19. For instance, keeping with the example of Fig. 16, Fig. 19 illustrates that pixel 1 is missing from Replicates 1 and 6 and has been replaced in both instances with an expected value. Similarly, pixel 4 is missing from Replicate 1 and has been replaced with an expected value. Likewise, pixel 5 is missing from Replicate 3 and has been replaced with an expected value. By replacing the pixels determined to be noise with predicted values, the graph of Fig. 19 depicts filtered and processed signal values on the ordinate and Replicate numbers on the abscissa that correspond closely with the ideal "clean" signal data illustrated in Fig. 14.

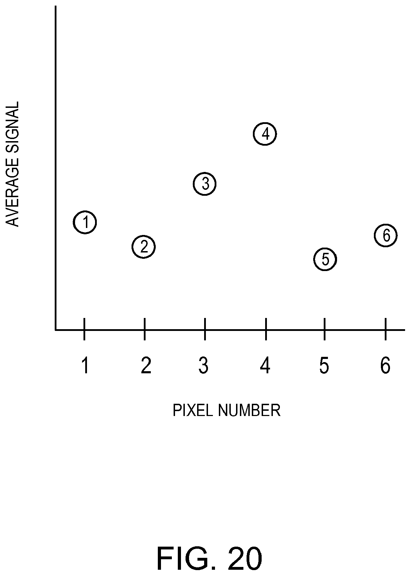

Referring to Fig. 20, the effect of the method 200 illustrated in Figs. 18A-18D, can be further ascertained for the example data, by evaluating a plot that illustrates the averaged signal value (for each pixel number) plotted on the ordinate and the pixel number plotted on the abscissa. In this plot, the average signal depicts an average of the filtered and processed signal values, i.e., an average of the data where determined noise spikes have been replaced with predicted values. More particularly, the results depicted in Fig. 20, after processing of the exemplary noisy data (see Figs. 16 and 17) using the method of Figs. 18A-18D, correspond closely with average signal values of the ideal "clean" signal represented in Fig. 15.

According to various aspects of the present invention, the quality of spectral data collected from any measurement process is improved, where the spectral data is affected by sharp, random noise events that are localized to a single region of the array and occur in a space of time that is short relative to the total measurement time. In particular, any measurement employing a CCD array can be affected by spike noise, and the method 200 may be used to remove that noise.

According to various aspects of the present invention, the filter method 200 finds noise spikes in replicate data sets over time rather than along the pixel data dimension, and thus provides a good approximation of the noise-free signal. This approach avoids errors caused by distortions of the shape of the spectral data in the pixel dimension, which may occur if correction was implemented along the pixel dimension.

## III. Negative Peak Filter

Signals from high-sensitivity charge-coupled device (CCD) array sensors can show a "negative peak" if certain conditions exist. Occasionally a pixel can go "bad," i.e., malfunction, causing consistently low counts (or intensity levels) for that pixel and distorting the overall spectrum. These negative peaks can significantly distort the true spectral data. However, according to examples useful for understanding the present invention, a statistical approach is provided to identify and remove negative peaks from a spectrum.

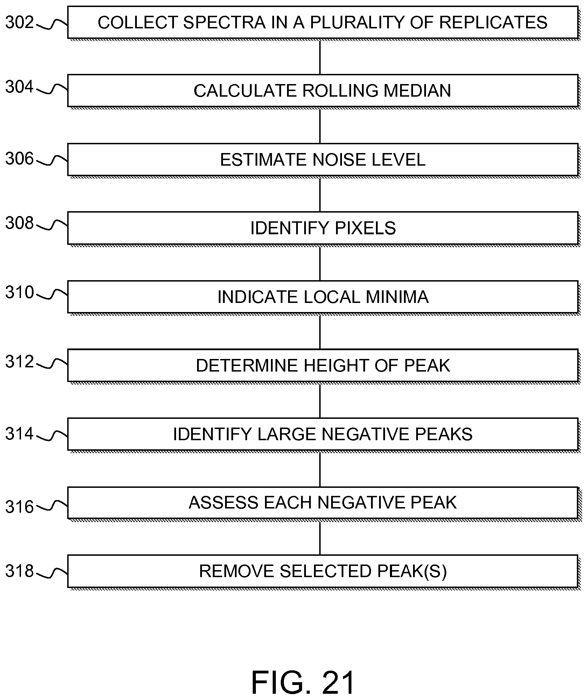

Referring to Fig. 21, a method 300 is illustrated for identifying and removing negative peaks from spectral data. For instance, an image output device 16 as described with reference to Fig. 1 may be utilized to capture a Raman spectrum onto a CCD device. In this regard, the filter of the method 300 may be implemented by executing, e.g., by the processor 42, computer readable program code, e.g., as stored in the computer readable storage medium 60 illustrated in Fig. 2.

Spectra are collected in a plurality of replicates at 302 in a manner analogous to that set out in greater detail herein. By way of example, the raw spectral data may be collected as eight replicates. In practice, other numbers of replicates may alternatively be selected. Moreover, the filter may be applied to the raw data that has been summed over the replicates at each pixel.

A rolling median is calculated for all pixels at 304. In this regard, a median width is specified. In an illustrative example, the median width is set to a value such as 11 pixels wide. However, other pixel widths can be utilized.

An estimate of the noise level of the spectrum is made at 306. As an illustrative example, a plurality of segments is taken, a model is fit to each segment and an estimated standard deviation is determined for the segments. In illustrative implementations, four segments are taken, such as at pixels 401-460, pixels 501-560, pixels 701-760 and pixels 926-985 of a CCD having 1024 pixels. A model such as a linear model is fit to each segment and the estimated standard deviation is set to the minimum standard deviation of the residuals of the four segments. In practice, any suitable number of segments or segment ranges may be utilized. Moreover, alternative models can be fit to each segment.

Pixels where the intensity deviates more than a predetermined amount are identified at 308. As an illustrative example, areas are identified where the intensity for a given pixel is more than one standard deviation from the rolling median. If an indentified area is greater than the rolling median, then that area may be indicated, e.g., with a "+". Likewise, if the identified area is less than the rolling median, then the area may be indicated, e.g., with a "-." The most recent pixel at which the values crossed the rolling median is recorded twice: once proceeding left to right and once proceeding right to left. This yields the first and last pixels for each negative peak. The width of each negative peak may thus be calculated, for example, as the number of pixels between (and including) the first and last pixels. Thus, width may be computed by subtracting the first pixel from the last pixel and adding one.

Local minima are indicated at 310. Local minima may be indicated, for example, when a pixel is less than the two pixels on either side thereof. Also, the "height" of the negative peak is determined at 312. The height of the negative peak at a pixel may be measured for example, by the absolute value of the difference between the rolling median and the minimum intensity of the negative peak.

As an illustration, the height of the negative peak at a predetermined width, e.g., a plurality of pixels, such as two pixels, is measured by the absolute value of the minimum difference between the intensity at the negative peak to the intensity of each of the adjacent pixels. If the intensities of both of the adjacent pixels are greater than the rolling median, then the height at a width of two pixels (in the current example) is equal to the height of the negative peak. Calculating the height of the negative peak at the width of a larger number of pixels, e.g., four pixels, is a bit more complicated. Such an approach starts by looking at the minimum difference between the intensity at the negative peak to the intensity of each of the pixels two away from the negative peak. Then the minimum distance between either of the adjacent pixels to the rolling median is considered. The height of the negative peak at the width of four pixels is the minimum of these four values.

Still further, large negative peaks are identified at 314. Large negative peaks may be identified, for example, when a local minimum has a height greater than a threshold, e.g., a multiple of the standard deviation. Under this arrangement, a height threshold can be specified. In an illustrated implementation, the height threshold is set to a value such as ten standard deviations.

Each large negative peak is assessed at 316. For instance, if the minimum height at the width of a predetermined number of pixels, e.g., two and four pixels, is less than one-half of the height of the negative peak, if the pixel is a local minimum within a predetermined number of pixels, e.g., ten pixels, and if the width of the negative peak is less than a specified threshold, then the peak is tagged for removal. Keeping with the above example, the width threshold may be specified as a value such as ten pixels.

Tagged peaks are removed at 318. In an illustrative implementation, each removed negative peak is replaced, e.g., with a linear interpolation between the pixel previous to the peak and the next pixel after the negative peak.

Various aspects of the present invention improve the quality of the spectral data collected from any measurement process that is affected by sharp, random noise events that are localized to a single region of the array. In particular, any measurement employing a CCD array can be affected by spike noise. CCD arrays are commonly used in spectroscopic measurements such as Raman, atomic, visible, and ultraviolet spectroscopy, and these types of measurements are employed in a wide variety of fields. However, various aspects of the present invention set out more fully herein, are provided to remove that noise.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present invention has been presented for purposes of illustration and description, but is not intended to be exhaustive or limited to the invention in the form disclosed. Many modifications and variations will be apparent to those of ordinary skill in the art without departing from the scope of the invention defined in the appended claims.

Various aspects of the present invention may be embodied as a computer program product embodied in one or more computer-readable storage medium(s) having computer-usable program code embodied thereon. Further, various aspects of the present invention may take the form of a computer program product accessible from a computer-usable or computer-readable medium providing program code for use by or in connection with a computer or any instruction execution system.

Aspects of the present invention are described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams may be implemented by system components or computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions that implement the function/act specified in the flowchart and/or block diagram block or blocks.

The computer program instructions may also be loaded onto a computer, other programmable data processing apparatus, or other devices to cause a series of operational steps to be performed on the computer, other programmable data processing apparatus, or other devices to produce a computer implemented process such that the instructions that execute on the computer, other programmable data processing apparatus, or other devices provide processes for implementing the functions/acts specified in the flowchart and/or block diagram block or blocks.

Computer systems programmed with instructions embodying the methods and/or systems disclosed herein, or computer systems programmed to perform various aspects of the present invention and storage or storing media that store computer readable instructions for converting a general purpose computer into a system based upon various aspects of the present invention disclosed herein, are also considered to be within the scope of the present invention. Once a computer is programmed to implement the various aspects of the present invention, including the methods of use as set out herein, such computer in effect, becomes a special purpose computer particular to the methods and/or program structures herein.

The flowchart and block diagrams in the Figures illustrate the architecture, functionality, and operation of possible implementations of systems, methods and computer program products according to various embodiments of the present invention. In this regard, one or more blocks in the flowchart or block diagrams may represent a component, segment, or portion of code, which comprises one or more executable instructions for implementing the specified logical function(s). In some alternative implementations, the functions noted in the blocks may occur out of the order noted in the figures. For example, two blocks shown in succession may, in fact, be executed substantially concurrently or in the reverse order, e.g., depending upon the functionality involved. Each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Having thus described the invention of the present application in detail and by reference to embodiments thereof, it will be apparent that modifications and variations are possible without departing from the scope of the invention defined in the appended claims.

## Claims

1. A method (200) of locating and removing spike noise from spectral data comprising:

   collecting (202) a plurality of replicates of spectral data, wherein:

   each collected replicate comprises a plurality of pixels, each pixel having an associated pixel intensity value and a pixel position; and the plurality of replicates represents discrete instances of spectral data obtained sequentially, from a sample under interrogation;

   performing pixel processing (206) to identify outliers corresponding to noise spikes within the plurality of replicates by:

   performing pixel adjustments (222) to transform the replicates by adjusting the pixel intensity values of the plurality of replicates based upon a predetermined function to compensate for a predicted decay in signal strength as each replicate is collected; and iterating, until no residual exceeds a predetermined threshold, by:

   fitting (224) a first model to the transformed replicates that predicts pixel intensity values by replicate;
   performing, for each pixel position across a range of pixel positions:

   computing a residual (226) based upon the adjusted pixel intensity values for each replicate at a corresponding pixel location within the range of pixel positions, and the intensity values for each replicate at the corresponding pixel location predicted from the first model;
   identifying a specific replicate from the plurality of replicates having the largest residual at the corresponding pixel location; and
   identifying the pixel intensity value at said pixel location for the replicate having the maximum residual value as an outlier (228) if an intensity value of that maximum residual exceeds the predetermined threshold; and

   performing spike noise filtering (208) by:

   removing each identified outlier from its replicate;
   fitting a final model (234) to the remaining replicates that predicts pixel intensity values by replicate, and because identified outliers are removed, representing a noise-free signal; and
   replacing the removed outlier intensity value with a pixel intensity value approximated by the final model at that removed outlier pixel position.

2. The method according to claim 1, wherein collecting (202) a plurality of replicates comprises collecting raw pixel data from a charge coupled device at least eight consecutive times from the sample under interrogation.

3. The method according to claim 1 further comprising performing replicate processing (204) to condition the intensity values of the collected replicates for subsequent pixel processing (206) and spike noise filtering (208), the replicate processing (204) comprising processing the plurality of replicates until each replicate is processed (218) by:

selecting a next replicate (212) from the plurality of replicates;
selecting a subset of pixel positions (214) for the selected replicate; and
performing compensation (216) of the subset of pixel positions to compensate for pixel intensity values that are invalid for subsequent pixel processing (206) and spike noise filtering (208).

4. The method according to claim 1, wherein:

fitting said first model comprises fitting a linear model with a constant slope and intercept across all replicates per pixel; and
computing said residual comprises computing a Studentized residual, where the Studentized residual is the residual divided by a standard error.

5. The method according to claim 1, wherein:
fitting said final model (234) by modeling each pixel location as a function of replicate and pixel intensity value with identified outliers removed comprises:

fitting a linear model with identified outlier replicate pixel intensity values replaced with predicted pixel intensity values from the final model at the pixel position of the removed outlier; and
transforming (236) replaced predicted pixel intensity values to their original scale by performing the inverse of the performed pixel adjustment (222).

6. The method according to claim 1, which further comprises:

performing replicate processing (204) to compensate for pixels values that are less than or equal to zero, by compensating the pixel intensity value to be greater than zero; and wherein performing pixel processing (206) to identify outliers comprises performing pixel adjustments (222) by computing the logarithm of the intensity values of each pixel position of each replicate.

7. The method according to claim 6, wherein performing pixel adjustments (222) further comprises mean centering by subtracting the mean logarithm of the intensity from the logarithm of the intensity for each pixel position of each replicate.

8. The method according to claim 6, wherein:

fitting said first model comprises fitting a model that linearly models each pixel position as a function of replicate and adjusted intensity value;
computing said residual (226) comprises computing a Studentized residual and a corresponding statistical p-value probability for that residual; and
identifying said pixel intensity value at said pixel location for the replicate having the maximum residual value as an outlier (228) if a pixel intensity value of that maximum residual exceeds a predetermined threshold comprises identifying the pixel intensity value as an outlier if the statistical p-value for that residual is greater than a predetermined threshold.

9. The method according to claim 8, wherein the predetermined threshold is a value of 0.05.

10. The method according to claim 1 further comprising:
performing said spike noise filtering (208) further comprises:

selecting a subset of pixel positions (214) for a selected replicate;
computing a second function (232) by performing a function to mean center the log(intensity) values of the subset of pixels for each pixel; and
transforming (236) each pixel of each replicate by performing an inverse of pixel adjustment processing (222) during pixel processing.

11. The method according to claim 7, wherein transforming each replicate by performing an inverse of pixel adjustment processing comprises using a logarithm function to transform values back to an original scale by adding a mean log(intensity) that was subtracted out during the pixel adjustment processing for that pixel and exponentiating the result.

12. The method according to claim 10, wherein:

performing replicate processing (204) comprises performing a compensation for pixels values that are less than or equal to zero, by compensating the pixel to a value greater than zero;
performing pixel processing to identify outliers comprises performing pixel adjustments (222) by computing the logarithm of the intensity values of each replicate and by performing mean centering by subtracting the mean logarithm of the intensity from the log(intensity) for each pixel position of each replicate; and
transforming (236) each pixel comprises adding the mean logarithm of the intensity that was subtracted out and exponentiating the result.

**Patentansprüche**

1. Verfahren (200) zum Orten und Entfernen von Schrotrauschen aus Spektraldaten, das Folgendes umfasst:

Sammeln (202) mehrerer Replikate von Spektraldaten, wobei:

jedes gesammelte Replikat mehrere Pixel umfasst, wobei jedes Pixel einen zugehörigen Pixelintensitätswert und eine Pixelposition aufweist; und
die mehreren Replikate diskrete Instanzen von Spektraldaten darstellen, die von einer abgefragten Probe fortlaufend erhalten werden;

Durchführen von Pixelverarbeitung (206), um Ausreißer zu identifizieren, die Rauschspitzen innerhalb der mehreren Replikate entsprechen, durch:

Durchführen von Pixelanpassungen (222), um die Replikate durch Anpassen der Pixelintensitätswerte der mehreren Replikate basierend auf einer vorgegebenen Funktion zu transformieren, um einen vorhergesagten Abfall der Signalstärke, wenn jedes Replikat gesammelt wird, zu kompensieren; und
Iterieren, bis kein Residuum eine vorgegebene Schwelle überschreitet, durch:

Angleichen (224) eines ersten Modells, das Pixelintensitätswerte durch Replikation vorhersagt, an die transformierten Replikate;
Durchführen, für jede Pixelposition über einen Bereich von Pixelpositionen hinweg, von Folgendem:

Berechnen eines Residuums (226) basierend auf den angepassten Pixelintensitätswerten für jedes Replikat an einem entsprechenden Pixelort innerhalb des Bereichs von Pixelpositionen und den Intensitätswerten, die aus dem ersten Modell vorhergesagt werden, für jedes Replikat an dem entsprechenden Pixelort;
Identifizieren eines spezifischen Replikats aus den mehreren Replikaten, die das größte Residuum an dem entsprechenden Pixelort aufweisen; und
Identifizieren des Pixelintensitätswerts an dem Pixelort für das Replikat, das den maximalen Residuumwert als einen Ausreißer (228) aufweist, falls ein Intensitätswert dieses maximalen Residuums die vorgegeben Schwelle überschreitet; und

Durchführen eines Filterns von Schrotrauschen (208) durch:

Entfernen jedes identifizierten Ausreißers aus seinem Replikat;
Angleichen eines endgültigen Modells (234), das Pixelintensitätswerte durch Replikation vorhersagt, an die verbleibenden Replikate, und Darstellen eines rauschfreien Signals, da identifizierte Ausreißer entfernt werden; und
Ersetzen des entfernten Ausreißerintensitätswerts durch einen Pixelintensitätswert, der durch das endgültige Modell an dieser Pixelposition des entfernten Ausreißers approximiert wird.

2. Verfahren nach Anspruch 1, wobei das Sammeln (202) mehrerer Replikate das Sammeln von Rohpixeldaten von einer ladungsgekoppelten Vorrichtung wenigstens acht Mal hintereinander aus der abgefragten Probe umfasst.

3. Verfahren nach Anspruch 1, das ferner das Durchführen von Replikationsverarbeitung (204), um die Intensitätswerte der gesammelten Replikate für die nachfolgende Pixelverarbeitung (206) und das Filtern von Schrotrauschen (208) zu konditionieren, umfasst, wobei die Replikationsverarbeitung (204) das Verarbeiten der mehreren Replikate umfasst bis jedes Replikat verarbeitet ist (218) durch:

Auswählen eines nächsten Replikats (212) aus den mehreren Replikaten;
Auswählen einer Teilmenge von Pixelpositionen (214) für das ausgewählte Replikat; und
Durchführen von Kompensation (216) der Teilmenge von Pixelpositionen, um Pixelintensitätswerte zu kompensieren, die für die nachfolgende Pixelverarbeitung (206) und das Filtern von Schrotrauschen (208) ungültig sind.

4. Verfahren nach Anspruch 1, wobei:

das Angleichen des ersten Modells das Angleichen eines linearen Modells mit einer konstanten Steigung und einem Schnittpunkt über alle Replikate pro Pixel hinweg umfasst; und

das Berechnen des Residuums das Berechnen eines studentisierten Residuums umfasst, wobei das studentisierte Residuum das Residuum geteilt durch einen Standardfehler ist.

5. Verfahren nach Anspruch 1, wobei:

das Angleichen des endgültigen Modells (234) durch Modellieren jedes Pixelorts in Abhängigkeit des Replikats und des Pixelintensitätswerts mit entfernten identifizierten Ausreißern Folgendes umfasst:

das Angleichen eines linearen Modells mit identifizierten Ausreißer-Replikat-Pixelintensitätswerten, die durch vorhergesagte Pixelintensitätswerte aus dem endgültigen Modell an der Pixelposition des entfernten Ausreißers ersetzt werden; und

das Transformieren (236) von ersetzten vorhergesagten Pixelintensitätswerten auf ihren ursprünglichen Umfang durch Durchführen des Umkehrens der durchgeführten Pixelanpassung (222).

6. Verfahren nach Anspruch 1, das ferner Folgendes umfasst:

Durchführen von Replikationsverarbeitung (204), um Pixelwerte, die kleiner als oder gleich Null sind, durch Kompensieren des Pixelintensitätswerts zu kompensieren, um größer als Null zu sein; und wobei

das Durchführen von Pixelverarbeitung (206), um Ausreißer zu identifizieren, das Durchführen von Pixelanpassungen (222) durch Berechnen des Logarithmus der Intensitätswerte jeder Pixelposition jedes Replikats umfasst.

7. Verfahren nach Anspruch 6, wobei das Durchführen von Pixelanpassungen (222) ferner eine Mittelwertzentrierung durch Subtrahieren des mittleren Logarithmus der Intensität von dem Logarithmus der Intensität für jede Pixelposition jedes Replikats umfasst.

8. Verfahren nach Anspruch 6, wobei:

das Angleichen des ersten Modells das Angleichen eines Modells, das jede Pixelposition in Abhängigkeit des Replikats und des angepassten Intensitätswerts linear modelliert, umfasst; das Berechnen des Residuums (226) das Berechnen eines studentisierten Residuums und einer entsprechenden statistischen p-Wert-Wahrscheinlichkeit für dieses Residuum umfasst; und

das Identifizieren des Pixelintensitätswerts an dem Pixelort für das Replikat, das den maximalen Residuumwert als einen Ausreißer (228) aufweist, falls ein Pixelintensitätswert dieses maximalen Residuums eine vorgegebene Schwelle überschreitet, das Identifizieren des Pixelintensitätswerts als einen Ausreißer umfasst, falls der statistische p-Wert für dieses Residuum größer als eine vorgegebene Schwelle ist.

9. Verfahren nach Anspruch 8, wobei die vorgegebene Schwelle ein Wert von 0,05 ist.

10. Verfahren nach Anspruch 1, das ferner Folgendes umfasst:
Durchführen des Filters von Schrotrauschen (208), das ferner Folgendes umfasst:

Auswählen einer Teilmenge von Pixelpositionen (214) für ein ausgewähltes Replikat; Berechnen einer zweiten Funktion (232) durch Durchführen einer Funktion, um den Mittelwert der Intensitätslogarithmus(Log(Intensität))-Werte der Teilmenge von Pixeln für jedes Pixel zu zentrieren; und Transformieren (236) jedes Pixels jedes Replikats durch Durchführen einer Umkehrung der Pixelanpassungsverarbeitung (222) während der Pixelverarbeitung.

11. Verfahren nach Anspruch 7, wobei das Transformieren jedes Replikats durch Durchführen einer Umkehrung der Pixelanpassungsverarbeitung ein Verwenden einer Logarithmusfunktion umfasst, um Werte zurück zu einem ursprünglichen Umfang durch Addieren eines Intensitätslogarithmus(Log(Intensität))-Mittelwerts, der während der Pixelanpassungsverarbeitung aus diesem Pixel subtrahiert wurde, und Potenzieren des Ergebnisses zu transformieren.

12. Verfahren nach Anspruch 10, wobei:

das Durchführen von Replikationsverarbeitung (204) das Durchführen einer Kompensation für Pixelwerte, die kleiner als oder gleich Null sind, durch Kompensieren des Pixels auf einen Wert größer als Null, umfasst; das Durchführen von Pixelverarbeitung, um Ausreißer zu identifizieren, das Durchführen von Pixelanpassungen (222) durch Berechnen des Logarithmus der Intensitätswerte jedes Replikats und durch Durchführen der Mittelwertzentrierung durch Subtrahieren des mittleren Logarithmus der Intensität von dem Intensitätslogarithmus(Log(Intensität)) für jede Pixelposition jedes Replikats umfasst; und

das Transformieren (236) jedes Pixels das Addieren des mittleren Logarithmus der Intensität, die subtrahiert wurde, und das Potenzieren des Ergebnisses umfasst.

**Revendications**

1. Procédé (200) de localisation et de suppression de bruit de pointe dans des données spectrales comprenant :

la collecte (202) d'une pluralité de répliques de données spectrales :

chaque réplique collectée comprenant une pluralité de pixels, chaque pixel ayant une valeur d'intensité de pixel associée et une position de pixel ; et
la pluralité de répliques représentant des instances discrètes de données spectrales obtenues séquentiellement, à partir d'un échantillon soumis à interrogation ;

la réalisation d'un traitement de pixel (206) pour identifier les valeurs aberrantes correspondant aux pics de bruit dans la pluralité de répliques en :

réalisant des réglages de pixel (222) pour transformer les répliques en réglant les valeurs d'intensité de pixel de la pluralité de répliques sur la base d'une fonction prédéterminée pour compenser un déclin prédit de l'intensité de signal lorsque chaque réplique est collectée ; et
itérant, jusqu'à ce qu'aucun résidu ne dépasse un seuil prédéfini :

ajustant (224) un premier modèle aux répliques transformées qui prédisent les valeurs d'intensité de pixel par réplique ;
réalisant, pour chaque position de pixel sur une plage de positions de pixel :

le calcul d'un résidu (226) sur la base des valeurs d'intensité de pixel réglées pour chaque réplique à un emplacement de pixel correspondant dans la plage de positions de pixel, et des valeurs d'intensité pour chaque réplique à l'emplacement de pixel correspondant prédit à partir du premier modèle ;
l'identification d'une réplique spécifique à partir de la pluralité de répliques ayant le plus grand résidu à l'emplacement de pixel correspondant ;
et l'identification de la valeur d'intensité de pixel audit emplacement de pixel pour la réplique ayant la valeur résiduelle maximale comme valeur aberrante (228) si une valeur d'intensité de ce résidu maximal dépasse le seuil prédéterminé ; et

la réalisation d'un filtrage de bruit de pointe (208) en :

supprimant chaque valeur aberrante identifiée de sa réplique ;
ajustant un modèle final (234) aux répliques restantes qui prédisent les valeurs d'intensité de pixel par réplique, et du fait que les valeurs aberrantes identifiées sont supprimées, en représentant un signal sans bruit ; et
remplaçant la valeur d'intensité de valeur aberrante supprimée par une valeur d'intensité de pixel approximée par le modèle final à cette position de pixel de valeur aberrante supprimée.

2. Procédé selon la revendication 1, la collecte (202) d'une pluralité de répliques comprenant la collecte de données de pixel brutes à partir d'un dispositif à couplage de charge au moins huit fois consécutives à partir de l'échantillon soumis à interrogation.

3. Procédé selon la revendication 1, comprenant en outre la réalisation d'un traitement de réplique (204) pour conditionner les valeurs d'intensité des répliques collectées pour un traitement de pixels (206) et un filtrage de bruit de pointe (208) ultérieurs, le traitement de réplique (204) comprenant le traitement de la pluralité de répliques jusqu'à ce que chaque réplique soit traitée (218) en :

sélectionnant une réplique suivante (212) parmi la pluralité de répliques ;
sélectionnant un sous-ensemble de positions de pixel (214) pour la réplique sélectionnée ; et
réalisant une compensation (216) du sous-ensemble de positions de pixel pour compenser les valeurs d'intensité de pixel qui ne sont pas valides pour le traitement de pixel (206) et le filtrage de bruit de pointe (208) ultérieurs.

4. Procédé selon la revendication 1 :

l'ajustement dudit premier modèle comprenant l'ajustement d'un modèle linéaire comprenant une pente et une interception constantes à travers toutes les répliques par pixel ; et

le calcul dudit résidu comprenant le calcul d'un résidu de Student, où le résidu de Student est le résidu divisé par une erreur standard.

5. Procédé selon la revendication 1 :
l'ajustement dudit modèle final (234) en modélisant chaque emplacement de pixel en fonction de la réplique et de la valeur d'intensité de pixel avec les valeurs aberrantes identifiées supprimées comprenant :

l'ajustement d'un modèle linéaire avec des valeurs d'intensité de pixel de réplique de valeur aberrante identifiée remplacées par des valeurs d'intensité de pixel prédites à partir du modèle final à la position de pixel de la valeur aberrante supprimée ; et

la transformation (236) des valeurs d'intensité de pixel prédites remplacées à leur échelle d'origine en réalisant l'inverse du réglage de pixel réalisé (222).

6. Procédé selon la revendication 1, qui comprend en outre :

la réalisation d'un traitement de réplique (204) pour compenser les valeurs de pixels qui sont inférieures ou égales à zéro, en compensant la valeur d'intensité de pixel pour qu'elle soit supérieure à zéro ; et

la réalisation d'un traitement de pixel (206) pour identifier des valeurs aberrantes comprenant la réalisation de réglages de pixel (222) en calculant le logarithme des valeurs d'intensité de chaque position de pixel de chaque réplique.

7. Procédé selon la revendication 6, la réalisation des réglages de pixel (222) comprenant en outre un centrage moyen en soustrayant le logarithme moyen de l'intensité à partir du logarithme de l'intensité pour chaque position de pixel de chaque réplique.

8. Procédé selon la revendication 6 :

l'ajustement dudit premier modèle comprenant l'ajustement d'un modèle qui modélise linéairement chaque position de pixel en fonction d'une réplique d'une valeur d'intensité réglée ;

le calcul dudit résidu (226) comprenant le calcul d'un résidu de Student et d'une probabilité de valeur p statistique correspondante pour ce résidu ; et

l'identification de ladite valeur d'intensité de pixel audit emplacement de pixel pour la réplique ayant la valeur résiduelle maximale comme valeur aberrante (228) si une valeur d'intensité de pixel de ce résidu maximal dépasse un seuil prédéterminé comprenant l'identification de la valeur d'intensité de pixel comme valeur aberrante si la valeur p statistique de ce résidu est supérieure à un seuil prédéterminé.

9. Procédé selon la revendication 8, le seuil prédéterminé étant une valeur de 0,05.

10. Procédé selon la revendication 1 comprenant en outre :
la réalisation dudit filtrage de bruit de pointe (208) comprenant en outre :

la sélection d'un sous-ensemble de positions de pixels (214) pour une réplique sélectionnée ;

le calcul d'une seconde fonction (232) en réalisant une fonction pour centrer en moyenne les valeurs log (d'intensité) du sous-ensemble de pixel pour chaque pixel ; et

la transformation (236) de chaque pixel de chaque réplique en réalisant un inverse du traitement de réglage de pixel (222) pendant le traitement de pixel.

11. Procédé selon la revendication 7, la transformation de chaque réplique en réalisant un inverse du traitement de réglage de pixel comprenant l'utilisation d'une fonction logarithmique pour transformer des valeurs vers une échelle d'origine en ajoutant un log(intensité) moyen qui a été soustrait pendant le traitement de réglage de pixel pour ce pixel et l'élévation à une puissance du résultat.

12. Procédé selon la revendication 10 :

la réalisation d'un traitement de réplique (204) comprenant la réalisation d'une compensation pour des valeurs de pixel qui sont inférieures ou égales à zéro, en compensant le pixel à une valeur supérieure à zéro ;

la réalisation d'un traitement de pixels pour identifier des valeurs aberrantes comprenant la réalisation de réglages de pixel (222) en calculant le logarithme des valeurs d'intensité de chaque réplique et en réalisant un centrage moyen en soustrayant le logarithme moyen de l'intensité du log(intensité) pour chaque position de pixel de chaque réplique ; et

la transformation (236) de chaque pixel comprenant l'ajout du logarithme moyen de l'intensité qui a été soustraite et l'élévation à une puissance du résultat.

10

LIGHT SOURCE ~ 12

18 ~

22

20
26
24
14

20A

POST DATA
COLLECTION
FILTER(S)
36 ~

28

32 ~

16 ~

30 ~ SPECTROMETER

# FIG. 1

FIG. 2

100

OBTAIN SPECTRA AS AT LEAST
TWO REPLICATES
(DATA GATHERING)

102

SMOOTH EACH REPLICATE
(PREPROCESSING)

104

DETERMINE IF A SPIKE IS
PRESENT IN A REPLICATE
(DATA ANALYSIS)

106

ELIMINATE EFFECT OF EACH
LOCATED SPIKE
(SPIKE ELIMINATION)

108

CONSOLIDATE REPLICATES
INTO A SINGLE SIGNAL
(SPECTRAL ANALYSIS
PREPARATION)

110

FIG. 3

EXAMPLE SPECTRUM, DESIGNATED REPLICATE 1, WITH SPIKE AT PIXEL 713

FIG. 4

EXAMPLE SPECTRUM, DESIGNATED REPLICATE 2, WITH SPIKE AT PIXEL 730

FIG. 5

SMOOTHED REPLICATE 1

# FIG. 6

RESIDUAL OF REPLICATE 1

# FIG. 7

PIXELS 700-750 OF REPLICATE 1

FIG. 8

PIXEL NUMBER

SUM OF REPLICATE 1 AND REPLICATE 2 RAW DATA

# FIG. 9

PIXEL NUMBER

SUM OF REPLICATE 1 AND REPLICATE 2 FILTERED DATA

# FIG. 10

FIG. 11

FIG. 12

FIG. 13

FIG. 14

EP 2 542 869 B1

FIG. 15

FIG. 16

FIG. 17

200

| 202 | COLLECT SPECTRA |
|---|---|

↓

| 204 | REPLICATE PROCESSING |
|---|---|

↓

| 206 | PIXEL PROCESSING |
|---|---|

↓

| 208 | FINAL FILTERING |
|---|---|

## FIG. 18A

FROM 202

204

| 212 | SELECT REPLICATE |
|---|---|

↓

| 214 | SELECT SUBSET OF PIXEL NUMBERS |
|---|---|

↓

| 216 | PERFORM COMPENSATION |
|---|---|

↓

218 — MORE REPLICATES?  Y

N

TO 206

## FIG. 18B

FROM 204

222 — PERFORM PIXEL ADJUSTMENT

206 —

224 — FIT MODEL

226 — COMPUTE RESIDUAL

228 — IDENTIFY OUTLIER

230 — MORE TO BE REMOVED? — Y

N

TO 208

# FIG. 18C

FROM 206

232 — COMPUTE SECOND FUNCTION

208 —

234 — FINAL FIT

236 — TRANSFORM

# FIG. 18D

EP 2 542 869 B1

FIG. 19

FIG. 20

302 ── COLLECT SPECTRA IN A PLURALITY OF REPLICATES

304 ── CALCULATE ROLLING MEDIAN

306 ── ESTIMATE NOISE LEVEL

308 ── IDENTIFY PIXELS

310 ── INDICATE LOCAL MINIMA

312 ── DETERMINE HEIGHT OF PEAK

314 ── IDENTIFY LARGE NEGATIVE PEAKS

316 ── ASSESS EACH NEGATIVE PEAK

318 ── REMOVE SELECTED PEAK(S)

# FIG. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **WIELAND HILL et al.** Spike-correction of weak signals from charge-coupled devices and its application in Raman spectroscopy. *Analytical Chemistry,* 01 November 1992, vol. 64 (21), 2575-2579